(19) Europäisches Patentamt
European Patent Office
Office européen des brevets

(11) Veröffentlichungsnummer: **0 071 985**
**B1**

(12) # EUROPÄISCHE PATENTSCHRIFT

(45) Veröffentlichungstag der Patentschrift: **20.03.85**

(21) Anmeldenummer: **82107074.5**

(22) Anmeldetag: **05.08.82**

(51) Int. Cl.⁴: **C 09 B 62/085,** C 09 B 62/51, D 06 P 3/66, D 06 P 3/10

(54) **Wasserlösliche Monoazoverbindungen, Verfahren zu ihrer Herstellung und ihre Verwendung als Farbstoffe.**

(30) Priorität: **11.08.81 DE 3131667**

(43) Veröffentlichungstag der Anmeldung: **16.02.83 Patentblatt 83/7**

(45) Bekanntmachung des Hinweises auf die Patenterteilung: **20.03.85 Patentblatt 85/12**

(84) Benannte Vertragsstaaten: **CH DE FR GB IT LI**

(56) Entgegenhaltungen:
**FR - A - 2 437 426**

**CHEMICAL ABSTRACTS, Band 93, Nr. 4, Juli 1980, Seite 65, Nr. 27709v, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Steuernagel, Hans-Helmut, Dr., An den Römergärten 1, D-6233 Kelkheim(Taunus) (DE)**

**EP 0 071 985 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Azofarbstoffe.

In Spalten 19/20 der DE-PS Nr. 1265698 wird mit der ersten Formel ein Monoazofarbstoff beschrieben, dessen Diazokomponente, formal betrachtet, ein 2-Sulfoanilin mit einer faserreaktiven Gruppierung in meta-Stellung zur Azogruppe und dessen Kupplungskomponente das 1-(2,5-Disulfophenyl)-3-carboxypyrazol-5-on ist; die faserreaktive Gruppierung beteht aus einem Chlor-s-triazinanteil und einem β-Sulfatoäthylsulfonylrest als zweitem faserreaktivem Anteil, wobei diese β-Sulfatoäthylsulfonylgruppe para-ständig über einen Phenylaminorest an den Chlortriazinrest gebunden ist, der wiederum über eine Aminogruppe in der besagten meta-Stellung an den Benzolkern des 2-Sulfoanilinteiles der Diazokomponente gebunden ist. Dieser bekannte Farbstoff zeigt Mängel in der Schweissechtheit.

Des weiteren sind Farbstoffe sehr ähnlicher Konstitution aus der französischen Patentanmeldungsveröffentlichung Nr. 2437426 bekannt, die jedoch anstelle des Chlortriazinrestes einen Fluortriazinrest enthalten. Diese Farbstoffe haben allerdings keine ausreichend gute Stabilität in natriumcarbonathaltigen Druckpasten; nach längerer Lagerung bei erhöhter Temperatur liefern sie Drucke mit deutlich verringerter Farbtiefe.

Mit der vorliegenden Erfindung wurden nunmehr neue wasserlösliche faserreaktive Monoazoverbindungen mit ähnlicher Konstitution, jedoch mit verbesserten Eigenschaften gefunden, die der allgemeinen Formel 1

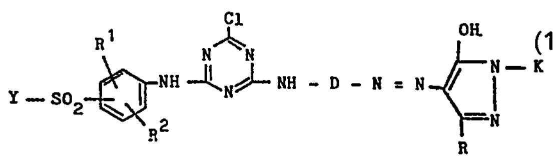

(1)

entsprechen und die mindestens zwei wasserlöslich machende Gruppen, wie Carboxy-, Thiosulfato-, Phosphato- und insbesondere Sulfato- und Sulfogruppen, enthalten; in der Formel 1

$R^1$ ist ein Wasserstoffatom, eine Alkylgruppe von 1 bis 4 C-Atomen, wie die Äthylgruppe und insbesondere Methylgruppe, eine Alkoxygruppe von 1 bis 4 C-Atomen, wie die Äthoxy- und insbesondere Methoxygruppe oder ein Chloratom;

$R^2$ ist ein Wasserstoffatom, eine Alkylgruppe von 1 bis 4 C-Atomen, wie die Äthylgruppe und insbesondere Methylgruppe, oder eine Alkoxygruppe von 1 bis 4 C-Atomen, wie die Äthoxygruppe und insbesondere die Methoxygruppe;

D ist eine Gruppe der Formel 2a oder 2b

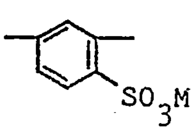

(2a)

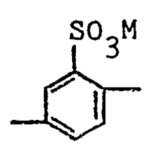

(2b)

in welchen die Gruppe $-SO_3M$ jeweils in ortho-Stellung zur Azogruppe steht, und

M ein Wasserstoffatom oder das Äquivalent eines ein-, zwei- oder dreiwertigen Metalls ist, wie insbesondere eines Alkali- oder Erdalkalimetalls, wie beispielsweise des Natriums, Kaliums und Calciums,

R ist die Methylgruppe oder eine Carbalkoxygruppe von 1 bis 4 C-Atomen, wie die Carbomethoxygruppe und die Carbäthoxygruppe, oder bevorzugt eine Carboxygruppe (der allgemeinen Formel $-COOM$ mit M der obengenannten Bedeutung),

wobei die Formelglieder $R^1$, $R^2$ und R zueinander gleiche oder voneinander verschiedene Bedeutungen besitzen können,

K ist ein Phenylrest, der durch 1, 2 oder 3 Substituenten aus der Gruppe Sulfo, Carboxy, Sulfamoyl, Carbamoyl, Alkyl von 1 bis 4 C-Atomen, wie Äthyl und insbesondere Methyl, Alkoxy von 1 bis 4 C-Atomen, wie Äthoxy und insbesondere Methoxy, und Chlor und gegebenenfalls durch eine Gruppe der Formel $-SO_2-Y'$ substituiert sein kann,

in welcher Y' für die β-Hydroxyäthylgruppe steht oder eine Gruppe Y der nachstehend angegebenen Bedeutung ist,

oder

K ist ein Mono-, Di- oder Trisulfonaphthylrest,

Y ist die Vinylgruppe oder eine Äthylgruppe, die in β-Stellung einen als Anion alkalisch eliminierbaren Rest enthält, wie beispielsweise eine β-Thiosulfatoäthylgruppe (entsprechend der Formel $-CH_2-CH_2-S-SO_3M$ mit M der obengenannten Bedeutung), eine β-Phosphatoäthylgruppe (entsprechend der Formel $-CH_2-CH_2-OPO_3M_2$ mit M der obengenannten Bedeutung), die β-Chloräthylgruppe oder die β-Acetyloxyäthylgruppe oder vorzugsweise eine β-Sulfatoäthylgruppe (entsprechend der Formel $-CH_2-CH_2-OSO_3M$ mit M der obengenannten Bedeutung);

hierbei ist jedoch diejenige Verbindung entsprechend der allgemeinen Formel 1 ausgenommen, in welcher Y die β-Sulfatoäthylgruppe bedeutet und diese Gruppe $-SO_2-Y$ in p-Stellung zur Aminogruppe gebunden ist, $R^1$ und $R^2$ beide Wasserstoff bedeuten, D einen Rest der Formel 2a darstellt, R eine Carboxygruppe ist und K für den 2,5-Disulfophenylrest steht (entsprechend der in Spalten 19/20 der DE-PS Nr. 1265698 als erste beschriebenen Verbindung).

In erweitertem Sinne können diejenigen Azoverbindungen entsprechend der allgemeinen Formel 1 ausgeschlossen werden, bei welchen K den 2,5-Disulfophenylrest bedeutet, falls D eine Gruppe der Formel 2a und R eine Carboxygruppe ist.

Der Formelrest K bedeutet vorzugsweise einen Monosulfophenyl-, den 2,4-Disulfophenyl-, den 2,5-Disulfophenyl-, den 3,5-Disulfophenyl-, einen Monochlormonosulfophenyl-, einen Dichlormonosulfophenyl-, einen Monomethylmonosulfophenyl-, einen Monochlormonomethylmonosulfophenylrest oder einen Rest der allgemeinen Formel 2c oder insbesondere einen Rest der allgemeinen Formel 2d

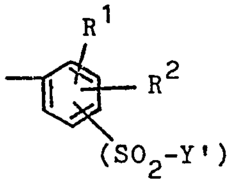
(2c)

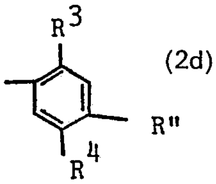
(2d)

in welchen $R^1$, $R^2$ und Y' die obengenannten Bedeutungen haben und n für die Zahl Null oder 1 (n=0 bedeutet H) steht und $R^3$ und $R^4$, zueinander gleich oder verschieden, jedes ein Wasserstoff- oder Chloratom oder die Methylgruppe ist und R'' die Sulfogruppe oder eine Gruppe $-SO_2-Y$ mit Y der obigen Bedeutung darstellt,
oder K ist bevorzugt ein Mono-, Di- oder Trisulfonaphthylrest.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschliesslich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Azoverbindungen der allgemeinen Formel 1. Diese Verfahren sind dadurch gekennzeichnet, dass man eine Diazoniumverbindung eines Amins der allgemeinen Formel 3

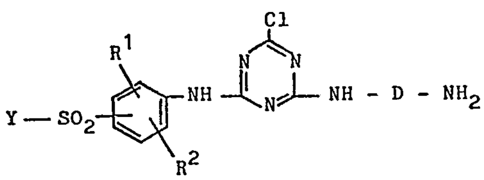
(3)

in welcher $R^1$, $R^2$, D und Y die obengenannten Bedeutungen haben, mit einer Pyrazolonverbindung der allgemeinen Formel 4

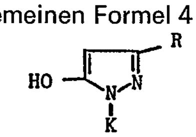
(4)

in welcher R und K die obengenannten Bedeutungen haben, kuppelt,
oder dass man eine Aminoazoverbindung der allgemeinen Formel 5

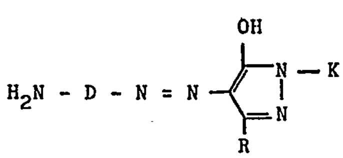
(5)

in welcher D, R und K die obengenannten Bedeutungen haben, mit einer Dichlortriazinverbindung der allgemeinen Formel 6

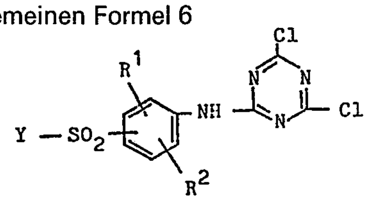
(6)

in welcher $R^1$, $R^2$ und Y die obengenannten Bedeutungen haben, umsetzt,
oder dass man eine Dichlortriazinverbindung der allgemeinen Formel 7

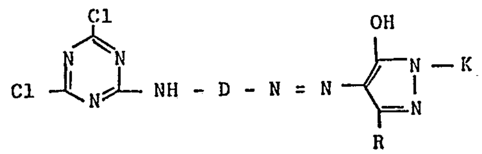
(7)

in welcher D, R und K die obengenannten Bedeutungen haben, mit einer Aminoverbindung der allgemeinen Formel 8

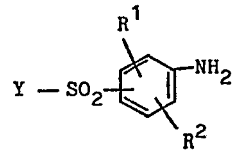
(8)

in welcher $R^1$, $R^2$ und Y die obengenannten Bedeutungen haben, umsetzt, wobei man die Reaktionskomponenten so auswählt, dass die entstehende Azoverbindung entsprechend der allgemeinen Formel 1 mindestens zwei wasserlöslichmachende Gruppen enthält, und wobei die Herstellung der obengenannten Verbindung aus der DE-PS Nr. 1265698 ausgeschlossen ist.

In den Ausgangsverbindungen der Formeln 3, 4, 5, 6, 7 und 8 kann der Formelrest Y (der in K durch den Formelrest Y' vertreten sein kann) auch die β-Hydroxyäthylgruppe bedeuten. Die so herstellbaren Verbindungen entsprechend der allgemeinen Formel 1, in welcher hier Y oder Y' oder beide die β-Hydroxyäthylgruppe bedeuten, lassen sich mittels eines entsprechenden Veresterungs- oder Acylierungsmittels analog bekannten Verfahrensweisen in die entsprechenden erfindungsgemässen Verbindungen der Formel 1 überführen, in welche Y bzw. Y' für eine Äthylgruppe steht, die in β-Stellung durch eine Estergruppe substituiert ist. Bevorzugt ist hierbei als Veresterung die Sulfatisierung, d.h. die Überführung der β-Hydroxyäthylgruppe in die β-Sulfatoäthylgruppe analog den zahlreich aus der Literatur bekannten Verfahrensweisen, wobei als Sulfatisierungsmittel vorzugsweise konzentrierte Schwefelsäure oder Schwefeltrioxid enthaltende Schwefelsäure verwendet wird.

Diese Veresterung, vorzugsweise Sulfatisierung, ist in demjenigen Falle zwingend, wenn Y in den Ausgangsverbindungen der Formeln 3, 6 und 8 für die β-Hydroxyäthylgruppe stand.

Die als Ausgangsverbindungen dienenden Amine der allgemeinen Formel 3 können analog bekannten Verfahrensweisen, beispielsweise durch Umsetzung einer Diaminoverbindung der allgemeinen Formel $H_2N-D-NH_2$ mit D der obengenannten Bedeutung mit einer Dichlortriazinverbindung der obenangegebenen und definierten allgemeinen Formel 6 oder durch Umsetzung von Cyanurchlorid (2,4,6-Trichlor-1,3,5-triazin) zunächst mit einer Diaminoverbindung der oben definierten Formel $H_2N-D-NH_2$ zu einer Verbindung der allgemeinen Formel 9

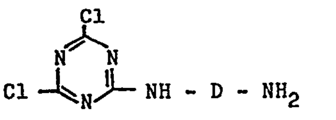

(9)

mit D der obengenannten Bedeutung und diese sodann mit einem Amin der obenangegebenen und definierten allgemeinen Formel 8, hergestellt werden.

Die als Ausgangsverbindungen dienenden Aminoazoverbindungen der allgemeinen Formel 5 lassen sich, ebenso analog bekannten Verfahrensweisen, herstellen, indem man beispielsweise eine Verbindung der allgemeinen Formel 10

$$R^3-D-NH_2 \qquad (10)$$

in welcher D die obengenannte Bedeutung besitzt und $R^3$ eine Nitrogruppe oder eine niedere Alkanoylaminogruppe, wie eine Acetylaminogruppe, ist, diazotiert, die erhaltene Diazoniumverbindung mit einer Pyrazolonverbindung der obengenannten und definierten allgemeinen Formel 4 kuppelt und in der so hergestellten Azoverbindung der allgemeinen Formel 11

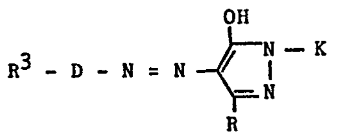

(11)

in welcher D, $R^3$, R und K die obengenannten Bedeutungen besitzen, im Falle, dass $R^3$ für die Nitrogruppe steht, diese Nitrogruppe analog bekannter Verfahrensweise reduziert, im Falle, dass $R^3$ für eine niedere Alkanoylaminogruppe steht, diese Gruppe analog bekannter Verfahrensweise zur Aminogruppe hydrolysiert.

Ebenso können analog bekannten Verfahrensweisen die als Ausgangsverbindungen dienenden Dichlortriazinverbindungen entsprechend der allgemeinen Formel 6 beispielsweise durch Umsetzung von Cyanurchlorid mit einem Amin der obenangegebenen und definierten allgemeinen Formel 8 hergestellt werden.

Die Synthese der Dichlortriazinverbindung der allgemeinen Formel 7 kann, analog bekannten Verfahrensweisen, durch Kondensation von Cyanurchlorid mit einer Aminoazoverbindung der obenangegebenen und definierten allgemeinen Formel 5 oder durch Umsetzung einer Diazoniumverbindung eines Amins der obenangegebenen und definierten allgemeinen Formel 9 mit einer Pyrazolonverbindung der obenangegebenen und definierten allgemeinen Formel 4 erfolgen.

Sowohl die Umsetzung von Cyanurchlorid mit einer Aminoazoverbindung der allgemeinen Formel 5 zur Verbindung der allgemeinen Formel 7 als auch die Umsetzung von Cyanurchlorid mit einer Aminoverbindung der allgemeinen Formel 8 zur Verbindung der allgemeinen Formel 6 kann in organischem oder wässerig-organischem Medium erfolgen. Vorzugsweise geschieht sie in wässerigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise solche des Natriums, Kaliums und Calciums sind: säurebindende Mittel sind ebenso tertiäre Amine, wie beispielsweise Pyridin oder Triäthylamin oder Chinolin. Diese Kondensationsreaktionen werden bei einer Temperatur zwischen −10 und +40, vorzugsweise zwischen −10 und +30, insbesondere bevorzugt bei einer Temperatur zwischen 0 und +10 °C, sowie bei einem pH-Wert zwischen 1,0 und 7,0 durchgeführt.

Die erfindungsgemässe Umsetzung der Dichlortriazinylamino-Verbindungen der allgemeinen Formeln 6, 7 und 9 mit entsprechenden Aminoverbindungen der allgemeinen Formel 5, der allgemeinen Formel 8 und der oben definierten allgemeinen Formel $H_2N-D-NH_2$ zu den Verbindungen der allgemeinen Formel 1 bzw. zu den Zwischenverbindungen der allgemeinen Formel 3 kann ebenso in organischem oder wässerig-organischem Medium erfolgen. Vorzugsweise werden sie jedoch in wässerigem Medium durchgeführt, wobei erforderlichenfalls ein säurebindendes Mittel, wie die obenangegebenen, zugesetzt wird. Die Umsetzung der Aminogruppen mit dem Chlor der Triazinverbindungen in den erfindungsgemässen Verfahren wird vorzugsweise bei einer Temperatur zwischen 10 und 60, insbesondere bevorzugt zwischen 20 und 50 °C, und bei einem pH-Wert zwischen 2 und 9, insbesondere zwischen 3 und 8, durchgeführt.

Die Diazotierung der Aminoverbindungen der allgemeinen Formel 3 bzw. der allgemeinen Formel 9 erfolgt analog bekannten Verfahrensweisen, beispielsweise in wässerig-organischem und vor allem in wässerigem, saurem Medium durch salpetrige Säure. Die Umsetzung der Diazoniumverbindungen mit den Pyrazolonverbindungen der allgemeinen Formel 4 wird ebenso analog bekannten Verfahrensweisen, beispielsweise in wässerig-organischem, vorwiegend aber in wässerigem Medium, im schwach sauren bis neutralen, gegebenenfalls sehr schwach alkalischem pH-Bereich ausgeführt.

Aminoverbindungen der allgemeinen Formel 8, die als Ausgangsverbindungen zur Herstellung der erfindungsgemässen Verbindungen dienen, sind beispielsweise

1-Amino-3-(β-sulfatoäthylsulfonyl)benzol,
1-Amino-2-methoxy-5-(β-sulfatoäthylsulfonyl)benzol,
1-Amino-2-methoxy-4-(β-sulfatoäthylsulfonyl)benzol,
1-Amino-2-methyl-5-(β-sulfatoäthylsulfonyl)benzol,
1-Amino-2-methyl-4-(β-sulfatoäthylsulfonyl)benzol,
1-Amino-4-methoxy-5-(β-sulfatoäthylsulfonyl)benzol,
1-Amino-4-methyl-5-(β-sulfatoäthylsulfonyl)benzol,
1-Amino-2-methoxy-5-methyl-4-(β-sulfatoäthylsulfonyl)benzol,
1-Amino-2,5-dimethoxy-4-(β-sulfatoäthylsulfonyl)benzol,
1-Amino-2,4-dimethoxy-5-(β-sulfatoäthylsulfonyl)benzol,

1-Amino-2-methyl-5-methoxy-4-(β-sulfato-äthylsulfonyl)benzol,

2-Chlor-1-amino-5-(β-sulfatoäthylsulfonyl)-benzol,

4-Chlor-1-amino-2-methyl-3-(β-sulfatoäthyl-sulfonyl)benzol,

5-Chlor-1-amino-2-methoxy-4-(β-sulfato-äthylsulfonyl)benzol sowie die entsprechenden β-Thiosulfatoäthylsulfonyl-, β-Phosphatoäthyl-sulfonyl-, β-Chloräthylsulfonyl-, β-Acetoxyäthyl-sulfonyl- und Vinylsulfonyl-Verbindungen und gegebenenfalls β-Hydroxyäthylsulfonyl-Verbindungen dieser β-Sulfatoäthylsulfonyl-Verbindungen, des weiteren bevorzugt 1-Amino-4-(β-sulfatoäthylsulfonyl)benzol und dessen entsprechende Thiosulfatoäthyl-, Phosphatoäthyl-, Chloräthyl-, Acetoxyäthyl- und Vinyl-Abkömmlinge und gegebenenfalls β-Hydroxyäthyl-Abkömmlinge.

Pyrazolonverbindungen entsprechend der allgemeinen Formel 4, die als Ausgangsverbindungen zur Herstellung der erfindungsgemässen Azoverbindungen dienen sind beispielsweise

1-(2'-Sulfophenyl)-3-methylpyrazol-5-on,

1-(3'-Sulfophenyl)-3-methylpyrazol-5-on,

1-(4'-Sulfophenyl)-3-methylpyrazol-5-on,

1-(2',4'-Disulfophenyl)-3-methylpyrazol-5-on,

1-(3',5'-Disulfophenyl)-3-methylpyrazol-5-on,

1-(2',5'-Disulfophenyl)-3-methylpyrazol-5-on,

1-(2'-Chlor-4'-sulfophenyl)-3-methylpyrazol-5-on,

1-(2'-Chlor-5'-sulfophenyl)-3-methylpyrazol-5-on,

1-(2',5'-Dichlor-4'-sulfophenyl)-3-methyl-pyrazol-5-on,

1-(2'-Methyl-4'-sulfophenyl)-3-methylpyr-azol-5-on,

1-(4'-Methyl-2'-sulfophenyl)-3-methylpyr-azol-5-on,

1-(2'-Methyl-3'-chlor-4'-sulfophenyl)-3-methylpyrazol-5-on,

1-(2'-Chlor-6'-methyl-4'-sulfophenyl)-3-methylpyrazol-5-on,

1-(3'-Carboxyphenyl)-3-methylpyrazol-5-on,

1-(3'-Sulfamoylphenyl)-3-methylpyrazol-5-on,

1-(4'-Sulfamoylphenyl)-3-methylpyrazol-5-on,

1-(6'-Sulfonaphth-2'-yl)-3-methylpyrazol-5-on,

1-(4',8'-Disulfonaphth-2'-yl)-3-methyl-pyrazol-5-on,

1-(5',7'-Disulfonaphth-2'-yl)-3-methyl-pyrazol-5-on,

1-(3',6',8'-Trisulfonaphth-2'-yl)-3-methyl-pyrazol-5-on,

1-(4',6',8'-Trisulfonaphth-2'-yl)-3-methyl-pyrazol-5-on,

1-(6'-Sulfonaphth-1'-yl)-3-methylpyrazol-5-on,

1-(7'-Sulfonaphth-1'-yl)-3-methylpyrazol-5-on,

1-[3'-(β-Sulfatoäthylsulfonyl)phenyl]-3-methylpyrazol-5-on,

1-[4'-(β-Sulfatoäthylsulfonyl)phenyl]-3-methylpyrazol-5-on,

1-[3'- oder 4'-(β-Thiosulfatoäthylsulfonyl)-phenyl]-3-methylpyrazol-5-on,

1-[3'- oder 4'-(β-Phosphatoäthylsulfonyl)-phenyl]-3-methylpyrazol-5-on,

1-[3'- oder 4'-(β-Acetoxyäthylsulfonyl)-phenyl]-3-methylpyrazol-5-on,

1-[3'- oder 4'-(β-Chloräthylsulfonyl)phenyl]-3-methylpyrazol-5-on,

1-(3'- oder 4'-Vinylsulfonylphenyl)-3-methyl-pyrazol-5-on,

1-[3'- oder 4'-(β-Hydroxyäthylsulfonyl)-phenyl]-3-methylpyrazol-5-on,

des weiteren Verbindungen der obengenannten Art, bei denen anstelle der Methylgruppe in 3-Stellung des Pyrazolonringes eine Carboxygruppe oder die Carbomethoxygruppe oder die Carbäthoxygruppe steht, des weiteren die Pyrazol-5-on-Verbindungen, die in 3-Stellung dieses Pyrazolonringes durch die Methylgruppe oder durch eine Carboxygruppe oder durch die Carbomethoxygruppe oder durch die Carbäthoxygruppe substituiert sind und jeweils in 1-Stellung des Pyrazolonrestes durch einen

2-Methoxy-5-methyl-4-(β-sulfatoäthyl-sulfonyl)phenyl-,

2,5-Dimethoxy-4-(β-sulfatoäthylsulfonyl)-phenyl-,

2-Methyl-5-(β-sulfatoäthylsulfonyl)phenyl-,

4-Methyl-5-(β-sulfatoäthylsulfonyl)phenyl-,

2-Methoxy-5-(β-sulfatoäthylsulfonyl)phenyl-,

4-Methoxy-5-(β-sulfatoäthylsulfonyl)phenyl-,

2-Methoxy-4-(β-sulfatoäthylsulfonyl)phenyl-,

2-Methyl-4-(β-sulfatoäthylsulfonyl)phenyl-,

2,4-Dimethoxy-5-(β-sulfatoäthylsulfonyl)-phenyl-,

2-Methyl-5-methoxy-4-(β-sulfatoäthylsulfonyl)phenylrest oder durch einen solchen Phenylrest substituiert sind, bei denen die Sulfatoäthylsulfonylgruppe durch die β-Thiosulfatoäthylsulfonyl-, β-Phosphatoäthylsulfonyl-, β-Chloräthylsulfonyl-, β-Acetoxyäthylsulfonyl-, β-Hydroxyäthylsulfonyl- oder Vinylsulfonylgruppe ersetzt ist.

Die Diaminoverbindungen entsprechend der obenangegebenen allgemeinen Formel $H_2N-D-NH_2$, die als Ausgangsverbindungen zur Herstellung der erfindungsgemässen Azoverbindungen dienen können, sind 1,3-Diaminobenzol-4-sulfonsäure und 1,4-Diaminobenzol-2-sulfonsäure.

Als Nitro- und Alkanoylamino-Verbindungen entsprechend der allgemeinen Formel 10, die zur Herstellung der Zwischenprodukte bei der Synthese der erfindungsgemässen Verbindungen dienen können, sind beispielsweise 4-Nitro-2-sulfoanilin, 4-Acetylamino-2-sulfoanilin, 5-Nitro-2-sulfoanilin und 5-Acetylamino-2-sulfoanilin.

Die Abscheidung und Isolierung der erfindungsgemäss hergestellten Verbindungen der allgemeinen Formel 1 aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemässen Verbindungen der allgemeinen Formel 1 haben faserreaktive Eigenschaften und besitzen sehr gute Farbstoffeigenschaften. Sie können deshalb zum Färben (einschliesslich Bedrucken) von hydroxygruppenhaltigen und/oder carbonamidgruppenhaltigen Materialien verwendet werden. Auch können die bei der Synthese der erfindungsgemässen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemässen Verbindungen der allgemeinen Formel 1 zum Färben (einschliesslich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen, indem man die Monoazoverbindung der allgemeinen Formel 1 in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern: regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemässen Verbindungen der allgemeinen Formel 1 lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wässerigem Bad bei Temperaturen zwischen 60 und 105 °C, gegebenenfalls bei Temperaturen bis zu 120 °C unter Druck und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschliessendes Dämpfen bei 100 bis 103 °C, oder zweiphasig, beispielsweise durch Bedrucken mit neutraler oder schwach saurer Druckfarbe und anschliessendem Fixieren entweder durch Hindurchführen durch ein heisses elektrolythaltiges alkalisches Bad oder durch Überklotzen mit einer alkalischen elektrolythaltigen Klotzflotte und anschliessendem Verweilen dieses behandelten Materials oder Dämpfen oder Behandlung mit Trockenhitze, durchgeführt werde können, erhält man farbstarke Drucke mit gutem Stand der Konturen und einem klaren Weissfond. Der Ausfall der Drucke ist von wechselnden Fixierbedingungen nur wenig abhängig.

Bei der Fixierung mittels Trockenhitze nach den üblichen Thermofixierverfahren verwendet man Heissluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel 1 auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemässen Verbindungen mit den säurebindenden Mitteln,

gegebenenfalls unter Wärmeeinwirkung, werden die erfindungsgemässen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Nassechtheiten, zumal sich nicht fixierte Farbstoffanteile leicht wegen ihrer guten Kaltwasserlöslichkeit auswaschen lassen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der 3fach molaren Menge einer Aminobenzolsulfonsäure und/oder einer Aminonaphthalinsulfonsäure und/oder auf Basis eines Umsetzungsproduktes von beispielsweise Stearylamin mit Äthylenoxid. In der Regel wird das zu färbende Material bei einer Temperatur von etwa 40°C in das Bad eingebracht, dort einige Zeit bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemässen Verbindungen der allgemeinen Formel 1 hergestellten Färbungen und Drucke zeichnen sich in der Regel durch klare, grünstichig gelbe bis gelbstichig orange Nuancen und hohe Farbstärken aus. Insbesondere besitzen die Färbungen und Drucke auf Cellulosefasermaterialien eine sehr gute Lichtechtheit und gute bis sehr gute Nassechtheiten, wie beispielsweise Wasch-, Walk-, Wasser-, Seewasser-, Überfärbe- und Schweissechtheiten, des weiteren eine gute Plissierechtheit, Bügelechtheit und Reibechtheit.

Ebenso von Bedeutung ist die erfindungsgemässe Verwendung der Verbindungen der allgemeinen Formel 1 auch für das faserreaktive Färben von Wolle. Insbesondere lässt sich auch filzfrei oder filzarm ausgerüstete Wolle (vgl. beispielsweise H. Rath, „Lehrbuch der Textilchemie", Springer-Verlag, 3. Aufl. (1972), S. 295-299, insbesondere die Ausrüstung nach dem sogenannten Hercosett-Verfahren (S. 298); „J. Soc. Dyers and Colourists", *1972*, 93-99, und *1975*, 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel 1 bevorzugt zunächst aus saurem Färbebad mit einem pH von etwa 3,5 bis 5,5 unter Kontrolle des pH-Wertes dem Ausziehprozess unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel 1 und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der Verbindungen der allgemeinen Formel 1 sehr gut ist, lassen sie sich auch mit Vorteil bei üblichen kontinuierlichen Färbeverfahren einsetzen. Die Farbstärke der erfindungsgemässen Verbindungen der allgemeinen Formel 1 ist sehr hoch. Sie liefern auf den Fasermaterialien, insbesondere beim reaktiven Färben von Wolle, klare, grünstichig gelbe bis gelbstichig orange Färbungen. Bei Anwendung von Färbetemperaturen von 100 bis 106°C ist eine hohe Baderschöpfung festzustellen.

Bei den mit den erfindungsgemässen Verbindungen der allgemeinen Formel 1 erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso lässt sich Material aus Wollfasern unterschiedlicher Provenienz mit den erfindungsgemässen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemässen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Nassechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Nassechtheitseigenschaften insbesondere die ausgezeichnete alkalische Schweissechtheit und sehr gute Waschechtheit bei 60°C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmässig beschriebenen Verbindungen sind in Form der freien Säuren angegeben; im allgemeinen werden sie in Form

ihrer Salze, wie insbesondere Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

*Beispiel 1*

a) Eine Lösung mit einem pH-Wert von 6 von 148 Teilen 4-(β-Sulfatoäthylsulfonyl)anilin in 500 Teilen Wasser werden in eine Suspension von 100 Teilen Cyanurchlorid und 3 Teilen eines handelsüblichen Netzmittels in 800 Teilen Eis und Wasser eingerührt. Man rührt noch einige Zeit bei einer Temperatur zwischen 0 und 5 °C weiter, wobei der pH-Wert mittels Natriumbicarbonat zwischen 3,5 und 4,5 gehalten ist. Der Umsetzungsgrad der Acylierungsreaktion ist 99% und höher.

b) Der unter a hergestellte Reaktionsansatz wird zu einer Lösung mit einem pH-Wert zwischen 6 und 7 aus 94 Teilen 1,3-Diaminobenzol-4-sulfonsäure in etwa 350 Teilen Wasser eingerührt; das Reaktionsgemisch wird auf 40 °C erwärmt und sodann bei einer Temperatur zwischen 40 und 45 °C weitergerührt, wobei der pH-Wert mittels Natriumbicarbonat zwischen 5 und 6 gehalten wird, bis die Diaminoverbindung praktisch nicht mehr nachweisbar ist.

c) Der aus der zweiten Acylierungsreaktion unter b erhaltene Ansatz wird mit 1000 Teilen Eis und 150 Vol.-Teilen einer wässerigen 31%igen Salzsäure versetzt; die Diazotierung erfolgt durch Zugabe einer wässerigen Lösung von 35 Teilen Natriumnitrit bei einer Temperatur zwischen 0 und 10 °C. Das erhaltene Diazotierungsgemisch wird sodann in eine Lösung mit einem pH-Wert zwischen 6 und 6,5 aus 142 Teilen 1-(4'-Sulfophenyl)-3-carboxypyrazol-5-on in etwa 1100 Teilen Wasser unter Rühren gegeben, wobei mittels Natriumbicarbonat der pH-Wert zwischen 4,5 und 6 während der gesamten Kupplungsreaktion gehalten wird. Bis zur beendeten Kupplung wird noch einige Zeit weitergerührt.

Die so hergestellte erfindungsgemässe Monoazoverbindung wird in üblicher Weise isoliert, beispielsweise durch Eindampfen oder Sprühtrocknung der neutralen Syntheselösung oder durch Aussalzen mit einem Elektrolytsalz, wie beispielsweise Kaliumchlorid. Man erhält ein elektrolythaltiges gelbes Pulver, das das Alkalimetallsalz, wie beispielsweise Kaliumsalz, der Verbindung der Formel

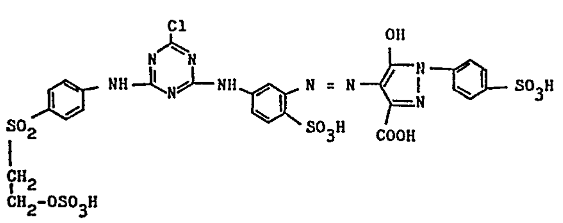

enthält. Diese erfindungsgemässe Azoverbindung zeigt sehr gute Farbstoffeigenschaften, insbesondere sehr gute faserreaktive Farbstoffeigenschaften, und liefert auf den in der Beschreibung genannten Materialien, wie insbesondere Cellulosefasermaterialien, wie beispielsweise Baumwolle, nach den in der Technik üblichen Applikations- und Fixiermethoden, insbesondere den für faserreaktive Farbstoffe beschriebenen und angewandten, farbstarke, klare grünstichig gelbe Färbungen und Drucke von guten Lichtechtheiten und guten Nassechtheiten, wie insbesondere guten Wasch-, Walk-, Schweiss- und Überfärbeechtheiten.

*Beispiel 2*

a) Eine Lösung von 39 Teilen Cyanurchlorid in 150 Vol.-Teilen Aceton werden unter Rühren auf 300 Teile Eis fliessen lassen. Sodann rührt man in diese Suspension etwa 1000 Vol.-Teile einer wässerigen, neutralen Lösung mit einer Temperatur von unterhalb 10 °C ein, die 110 Teile der Aminoazoverbindung der Formel

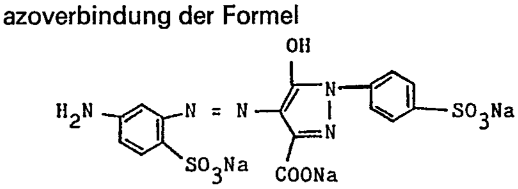

enthält. Man rührt noch etwa 4 h bei 0 bis 10 °C weiter, bis praktisch kein Amin mehr nachweisbar ist. Während der ganzen Acylierungsreaktion wird der pH-Wert zwischen 4 und 5 gehalten.

b) 400 Vol.-Teile einer wässerigen neutralen Lösung von 59 Teilen 4-(β-Sulfatoäthylsulfonyl)-anilin werden in den unter a hergestellten Reaktionsansatz eingerührt. Anschliessend wird die Reaktionsmischung innerhalb von 2 h auf eine Temperatur von 40 bis 45 °C erwärmt und noch etwa 12 h bei einer Temperatur zwischen 40 und 50 °C weitergerührt, wobei bis zur Beendigung der Acylierungsreaktion mittels Natriumbicarbonat ein pH-Wert zwischen 4,5 und 6,5 gehalten wird.

Die hier nach dieser Verfahrensvariante hergestellte erfindungsgemässe Monoazoverbindung wird in üblicher Weise isoliert, beispielsweise gemäss den Angaben des Beispieles 1; sie ist mit der gemäss Beispiel 1 hergestellten erfindungsgemässen Monoazoverbindung identisch und besitzt dementsprechend die selben guten färberischen Eigenschaften und guten Echtheiten wie die erfindungsgemässe Verbindung, die gemäss Beispiel 1 hergestellt wird.

*Beispiel 3*

Zur Herstellung einer erfindungsgemässen Monoazoverbindung verfährt man gemäss den Verfahrensweisen des Beispieles 1, ersetzt jedoch dort im Beispiel 1a das 4-(β-Sulfatoäthylsulfonyl)-anilin durch 156 Teile 4-(β-Thiosulfatoäthylsulfonyl)anilin.

Nach Aufarbeitung der Syntheselösung und Isolierung der Monoazoverbindung erhält man ein elektrolythaltiges Pulver, das das Alkalimetallsalz, wie Natrium- und/oder Kaliumsalz, der Verbindung der Formel

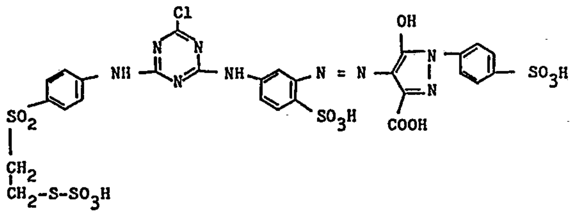

enthält. Diese erfindungsgemässe Verbindung zeigt sehr gute Farbstoffeigenschaften und liefert beispielsweise auf Baumwolle nach den in der Technik für faserreaktive Farbstoffe üblichen Applikations- und Fixiermethoden farbstarke, grünstichig gelbe Färbungen und Drucke von guten Lichtechtheiten und Nassechtheitseigenschaften, wie beispielsweise gute Echtheiten in der Wäsche.

*Beispiel 4*

Zur Herstellung einer erfindungsgemässen Monoazoverbindung verfährt man gemäss den Verfahrensweisen des Beispieles 2, ersetzt jedoch dort die im Beispiel 2b verwendete wässerige Lösung des 4-(β-Sulfatoäthylsulfonyl)anilins durch eine Lösung von 39 Teilen 4-Vinylsulfonylanilin in 200 Vol.-Teilen Aceton.

Nach Aufarbeitung der Syntheselösung und Isolierung der hergestellten Azoverbindung erhält man ein Elektrolythaltiges Pulver, das das Alkalimetallsalz, wie beispielsweise Natriumsalz der Verbindung der Formel

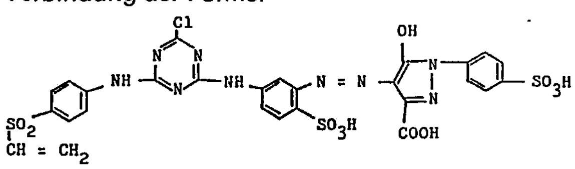

enthält. Diese erfindungsgemässe Verbindung zeigt ebenfalls sehr gute Farbstoffeigenschaften und liefert nach den in der Technik für faserreaktive Farbstoffe üblichen Applikations- und Fixiermethoden, beispielsweise auf Baumwolle, kräftige, grünstichig gelbe Färbungen und Drucke von guten Licht- und Nassechtheitseigenschaften.

*Beispiel 5*

Zur Herstellung einer erfindungsgemässen Monoazoverbindung verfährt man gemäss den Verfahrensweisen des Beispieles 2, ersetzt jedoch dort im Beispiel 2b die wässerige Lösung des 4-(β-Sulfatoäthylsulfonyl)anilins durch 46 Teile pulverförmiges 4-(β-Chloräthylsulfonyl)anilin.

Nach Aufarbeitung der Syntheselösung und Isolierung der hergestellten Monoazoverbindung erhält man ein elektrolythaltiges Pulver mit dem Alkalimetallsalz, beispielsweise Natrium- und/oder Kaliumsalz, der Verbindung der Formel

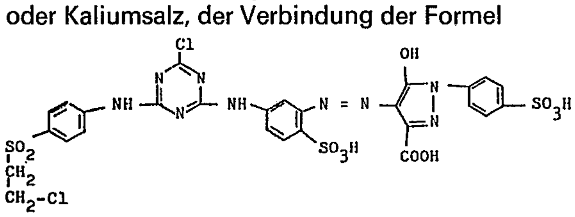

Diese erfindungsgemässe Monoazoverbindung besitzt sehr gute Farbstoffeigenschaften; man erhält mit ihr beispielsweise auf Baumwolle unter Anwendung der in der Technik für faserreaktive Farbstoffe üblichen Applikations- und Fixiermethoden farbstarke, grünstichig gelbe Färbungen von guten Licht- und Nassechtheitseigenschaften.

*Beispiel 6*

a) Eine Lösung mit einem pH-Wert zwischen 6 und 6,5 von 59,2 Teilen 4-(β-Sulfatoäthylsulfonyl)anilin in 200 Teilen Wasser werden in eine Suspension eingerührt, die man durch langsame Zugabe einer Lösung von 40 Teilen Cyanurchlorid in 100 Vol.-Teilen Aceton zu 320 Teilen Eis erhalten hat. Während der Acylierungsreaktion wird mittels Natriumbicarbonat ein pH-Wert zwischen 3,5 und 4,5 und die Temperatur zwischen 0 und 10 °C gehalten. Man rührt bei dieser Temperatur weiter, bis praktisch kein Amin mehr nachweisbar ist.

b) Man lässt 1000 Vol.-Teile einer wässerigen, neutralen Lösung, die 110 Teile der im Beispiel 2a formelmässig genannten Aminoazoverbindung enthält, zu dem hier unter a hergestellten Reaktionsansatz einfliessen und erhöht sodann innerhalb von 2 h die Temperatur dieser Reaktionsmischung auf 40 °C. Mittels Natriumbicarbonat oder Natriumcarbonat hält man den pH-Wert des Ansatzes während der ganzen Acylierungsreaktion zwischen 4,5 und 6. Man rührt noch bei einer Temperatur zwischen 40 bis 50° C weiter, bis die Acylierungsreaktion praktisch beendet ist.

Die so hergestellte erfindungsgemässe Monoazoverbindung wird in üblicher Weise isoliert, beispielsweise durch Ausfällen mittels Kaliumchlorid aus der Reaktionslösung. Nach Absaugen und Trocknen und Mahlen des Niederschlages erhält man ein gelbes, elektrolythaltiges Pulver, das das Alkalimetallsalz, wie beispielsweise Kaliumsalz, der im Beispiel 1 formelmässig angegebenen erfindungsgemässen Monoazoverbindung enthält. Die gemäss der hier beschriebenen Verfahrensvariante hergestellte, mit der des Beispieles 1 identische erfindungsgemässe Monoazoverbindung zeigt die gleichen guten färberischen Eigenschaften und Echtheiten der mit ihr erhältlichen farbstarken, klaren, grünstichig gelben Färbungen und Drucke.

*Beispiel 7*

Man verfährt zur Herstellung einer erfindungsgemässen Monoazoverbindung gemäss den Verfahrensweisen des Beispieles 1, ersetzt jedoch die im Beispiel 1a verwendete 1,3-Diaminobenzol-4-sulfonsäure durch die gleiche Menge 1,4-Diaminobenzol-2-sulfonsäure. Man erhält das entsprechende Alkalimetallsalz der Verbindung der Formel

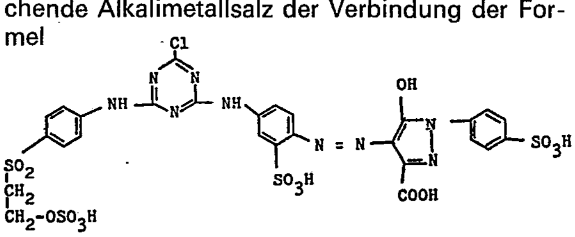

die ebenfalls sehr gute Farbstoffeigenschaften besitzt. Sie liefert nach den für Reaktivfarbstoffe üblichen Färbe- und Druckverfahren auf Cellulosefasermaterialien, wie beispielsweise auf Baumwolle, farbstarke, klare, gelbstichig orange Färbungen und Drucke von sehr guten Licht- und Nassechtheitseigenschaften, wie guten Waschechtheiten, Walkechtheiten und Schweissechtheiten.

*Beispiele 8 bis 243*

In den nachfolgenden Tabellenbeispielen sind weitere erfindungsgemässe Monoazoverbindungen entsprechend der allgemeinen Formel 1 mit Hilfe ihrer Komponenten, aus denen sie zusammen mit dem Rest des Cyanurchlorids aufgebaut sind, beschrieben. Sie lassen sich aus diesen Aminoverbindungen und Cyanurchlorid in erfindungsgemässer Weise, wie beispielsweise nach einer in den obigen Beispielen 1 bis 7 beschriebenen Verfahrensvarianten, herstellen. Sie zeigen sehr gute Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel angegebenen Farbton der Baumwollfärbung.

In diesen Tabellenbeispielen haben die Formelglieder $Z_1$ bis $Z_6$ folgende Bedeutungen:

$Z_1$: $-SO_2-CH_2-CH_2-OSO_3M$
$Z_2$: $-SO_2-CH_2-CH_2-S-SO_3M$
$Z_3$: $-SO_2-CH_2-CH_2-Cl$
$Z_4$: $-SO_2-CH=CH_2$
$Z_5$: $-SO_2-CH_2-CH_2-O-CO-CH_3$
$Z_6$: $-SO_2-CH_2-CH_2-OPO_3M_2$

in welchen M die in der Beschreibung genannte Bedeutung besitzt.

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 8 | 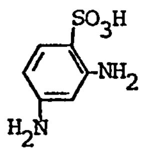 | 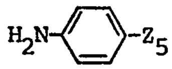 | 1-(4'-Sulfophenyl)-3-carboxy-pyrazolon-(5) | grünst. gelb |
| 9 | dito | 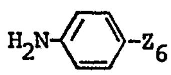 | dito | grünst. gelb |
| 10 | dito | 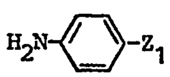 | 1-(4'-Sulfophenyl)-3-carbomethoxy-pyrazolon-(5) | grünst. gelb |
| 11 | dito | 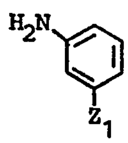 | dito | grünst. gelb |
| 12 | dito | 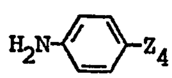 | dito | grünst. gelb |
| 13 | dito | 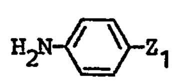 | 1-(4'-Sulfophenyl)-3-carbäthoxy-pyrazolon-(5) | grünst. gelb |
| 14 | dito | 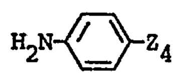 | dito | grünst. gelb |
| 15 | dito | 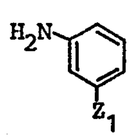 | dito | grünst. gelb |
| 16 | dito | 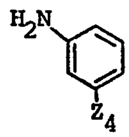 | dito | grünst. gelb |
| 17 | dito | 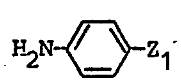 | 1-(4'-Sulfophenyl)-3-methyl-pyrazolon-(5) | grünst. gelb |
| 18 | dito | 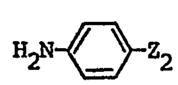 | dito | grünst. gelb |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 19 | dito | 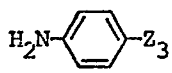 | dito | grünst. gelb |
| 20 | 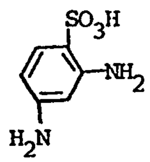 | 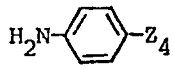 | 1-(4'-Sulfophenyl)-3-methyl-pyrazolon-(5) | grünst. gelb |
| 21 | dito | 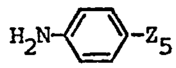 | dito | grünst. gelb |
| 22 | dito | 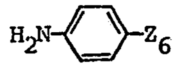 | dito | grünst. gelb |
| 23 | dito | 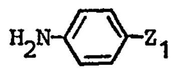 | 1-[4'-(β-Sulfatoäthylsulfonyl)-phenyl]-3-methylpyrazolon-(5) | grünst. gelb |
| 24 | dito | 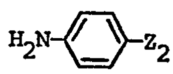 | dito | grünst. gelb |
| 25 | dito | 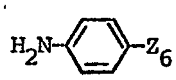 | dito | grünst. gelb |
| 26 | dito | 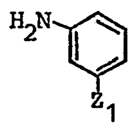 | dito | grünst. gelb |
| 27 | dito | 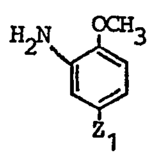 | dito | grünst. gelb |
| 28 | dito | 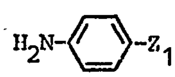 | 1-[4'-(β-Sulfatoäthylsulfonyl)-phenyl]-3-carboxypyrazolon-(5) | gelb |
| 29 | dito | 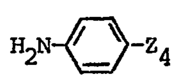 | dito | gelb |
| 30 | dito | 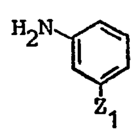 | dito | gelb |
| 31 | dito | 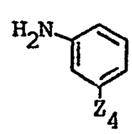 | dito | gelb |
| 32 | 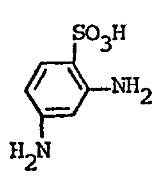 | 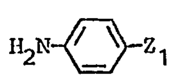 | 1-[4'-(β-Sulfatoäthylsulfonyl)-phenyl]-3-carbomethoxypyrazolon-(5) | gelb |
| 33 | dito | 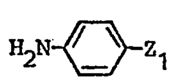 | 1-[4'-(β-Sulfatoäthylsulfonyl)-phenyl]-3-carboäthoxypyrazolon-(5) | gelb |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 34 | dito | 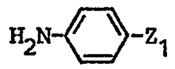 | 1-[2'-Methoxy-5'-(β-sulfatoäthyl-sulfonyl)phenyl]-3-carboxy-pyrazolon-(5) | gelb |
| 35 | dito | 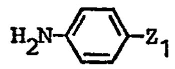 | dito | gelb |
| 36 | dito | 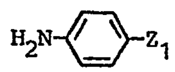 | 1-[4'-Methyl-3'-(sulfatoäthylsulfonyl)-phenyl]-3-carboxypyrazolon-(5) | gelb |
| 37 | dito | 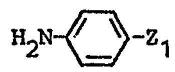 | 1-[4'-Methoxy-3'-(β-sulfatoäthyl-sulfonyl)phenyl]-3-carboxy-pyrazolon-(5) | gelb |
| 38 | dito | 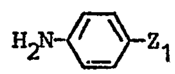 | 1-[2',5'-Dimethoxy-4'-(β-sulfatoäthyl-sulfonyl)phenyl]-3-carboxy-pyrazolon-(5) | gelb |
| 39 | dito | 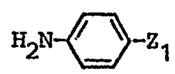 | 1-[2'-Methoxy-5'-methyl-4'-(β-sulfatoäthylsulfonyl)phenyl]-3-carboxy-pyrazolon-(5) | gelb |
| 40 | dito | 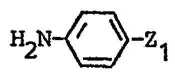 | 1-[2'-Chlor-5'-(β-sulfatoäthyl-sulfonyl)phenyl]-3-carboxy-pyrazolon-(5) | gelb |
| 41 | dito | 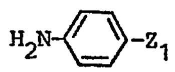 | 1-(2',4'-Disulfophenyl)-3-methyl-pyrazolon-(5) | grünst. gelb |
| 42 | 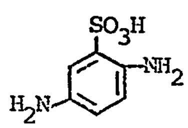 | 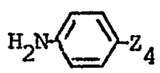 | dito | goldgelb |
| 43 | 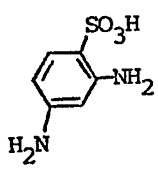 | 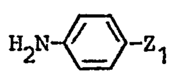 | 1-(3',5'-Disulfophenyl)-3-methyl-pyrazolon-(5) | grünst. gelb |
| 44 | dito | 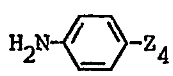 | dito | grünst. gelb |
| 45 | dito | 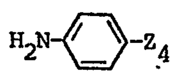 | 1-(3',5'-Disulfophenyl)-3-carboxy-pyrazolon-(5) | grünst. gelb |
| 46 | dito | 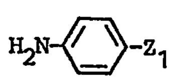 | dito | grünst. gelb |
| 47 | dito | 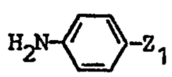 | 1-(3',5'-Disulfophenyl)-3-carbo-methoxypyrazolon-(5) | grünst. gelb |
| 48 | dito | 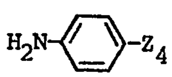 | dito | grünst. gelb |
| 49 | dito | 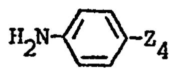 | 1-(3',5'-Disulfophenyl)-3-carbäthoxy-pyrazolon-(5) | grünst. gelb |
| 50 | dito | 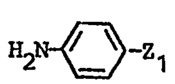 | dito | grünst. gelb |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 51 | dito | 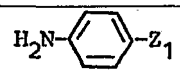 | 1-(2',5'-Disulfophenyl)-3-methyl-pyrazolon-(5) | grünst. gelb |
| 52 | dito | 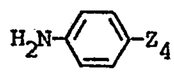 | dito | grünst. gelb |
| 53 | dito | 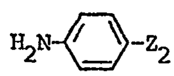 | dito | grünst. gelb |
| 54 | dito | 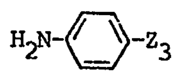 | dito | grünst. gelb |
| 55 | dito | 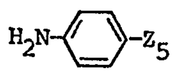 | dito | grünst. gelb |
| 56 | dito | 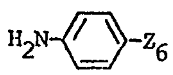 | dito | grünst. gelb |
| 57 | 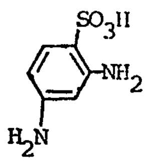 | 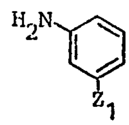 | 1-(2',5'-Disulfophenyl)-3-methyl-pyrazolon-(5) | grünst. gelb |
| 58 | dito | 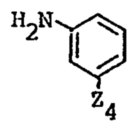 | dito | grünst. gelb |
| 59 | dito | 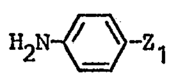 | 1-(2',5'-Disulfophenyl)-3-carbo-methoxypyrazolon-(5) | grünst. gelb |
| 60 | dito | 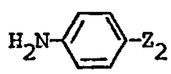 | dito | grünst. gelb |
| 61 | dito | 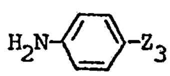 | dito | grünst. gelb |
| 62 | dito | 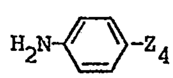 | dito | grünst. gelb |
| 63 | dito | 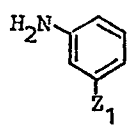 | dito | grünst. gelb |
| 64 | dito | 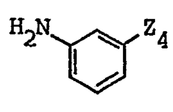 | dito | grünst. gelb |
| 65 | dito | 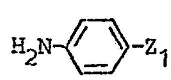 | 1-(2',5'-Disulfophenyl)-3-carbäthoxy-pyrazolon-(5) | grünst. gelb |
| 66 | dito | 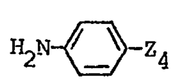 | dito | grünst. gelb |
| 67 | dito | 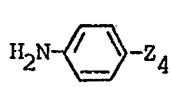 | 1-(2'-Chlor-4'-sulfophenyl)-3-methylpyrazolon-(5) | grünst. gelb |
| 68 | dito | 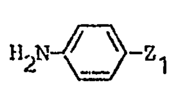 | dito | grünst. gelb |

| Bei-spiel | Diamin der allg. Formel $H_2N-D-NH_2$ | Aminoverbindung der Formel (8) | Pyrazolon-Verbindung der Formel (4) | Farbton |
|---|---|---|---|---|
| 69 | 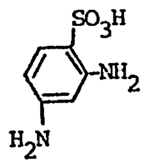 | 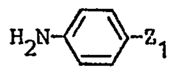 | 1-(2'-Chlor-4'-sulfophenyl)-3-carboxypyrazolon-(5) | grünst. gelb |
| 70 | dito | 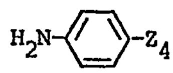 | dito | grünst. gelb |
| 71 | dito | 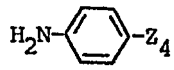 | 1-(2',5'-Dichlor-4'-sulfophenyl)-3-methylpyrazolon-(5) | grünst. gelb |
| 72 | dito | 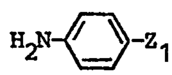 | dito | grünst. gelb |
| 73 | dito | 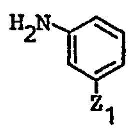 | dito | grünst. gelb |
| 74 | dito | 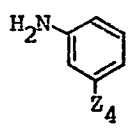 | dito | grünst. gelb |
| 75 | dito | 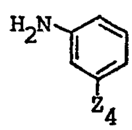 | 1-(2',5'-Dichlor-4'-sulfophenyl)-3-carboxypyrazolon-(5) | grünst. gelb |
| 76 | dito | 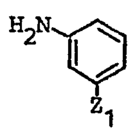 | dito | grünst. gelb |
| 77 | dito | 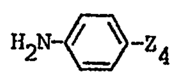 | dito | grünst. gelb |
| 78 | dito | 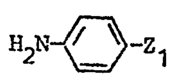 | dito | grünst. gelb |
| 79 | dito | 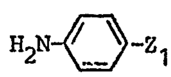 | 1-(2'-Methyl-4'-sulfophenyl)-3-methylpyrazolon-(5) | grünst. gelb |
| 80 | dito | 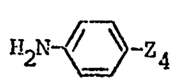 | dito | grünst. gelb |
| 81 | 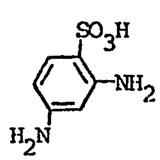 | 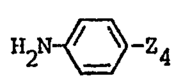 | 1-(2'-Methyl-4'-sulfophenyl)-3-carboxypyrazolon-(5) | grünst. gelb |
| 82 | dito | 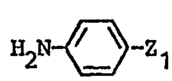 | dito | grünst. gelb |
| 83 | dito | 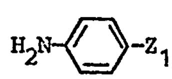 | 1-(2'-Chlor-6'-methyl-4'-sulfophenyl)-3-methylpyrazolon-(5) | grünst. gelb |

| Bei-spiel | Diamin der allg. Formel $H_2N-D-NH_2$ | Aminoverbindung der Formel (8) | Pyrazolon-Verbindung der Formel (4) | Farbton |
|---|---|---|---|---|
| 84 | dito | 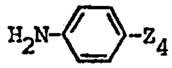 | dito | grünst. gelb |
| 85 | dito | 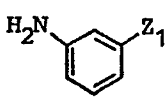 | dito | grünst. gelb |
| 86 | dito | 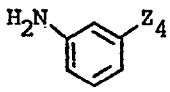 | dito | grünst. gelb |
| 87 | dito | 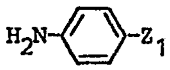 | 1-(2'-Chlor-6'-methyl-4'-sulfo-phenyl)-3-carboxypyrazolon-(5) | grünst. gelb |
| 88 | dito | 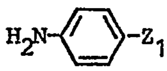 | 1-[6'-Sulfonaphthyl-(2')]-3-carboxy-pyrazolon-(5) | gelb |
| 89 | dito | 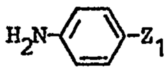 | 1-[4',8'-Disulfonaphthyl-(2')]-3-methylpyrazolon-(5) | grünst. gelb |
| 90 | dito | 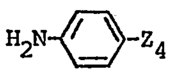 | dito | grünst. gelb |
| 91 | dito | 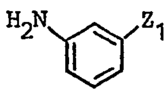 | dito | grünst. gelb |
| 92 | dito | 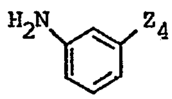 | dito | grünst. gelb |
| 93 | dito | 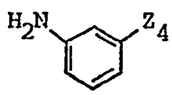 | 1-[4',8'-Disulfonaphthyl-(2')]-3-carboxypyrazolon-(5) | gelb |
| 94 | 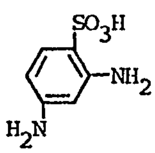 | 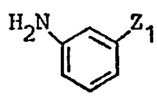 | 1-[4',8'-Disulfonaphthyl-(2')]-3-carboxypyrazolon-(5) | gelb |
| 95 | dito | 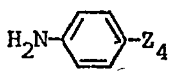 | dito | gelb |
| 96 | dito | 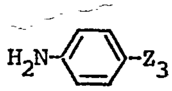 | dito | gelb |
| 97 | dito | 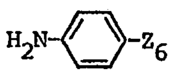 | dito | gelb |
| 98 | dito | 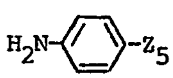 | dito | gelb |
| 99 | dito | 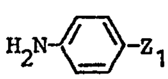 | dito | gelb |
| 100 | dito | 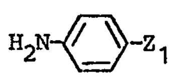 | 1-[4',6',8'-Trisulfonaphthyl-(2')]-3-carboxypyrazolon-(5) | gelb |
| 101 | dito | 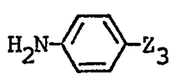 | dito | gelb |

| Bei-spiel | Diamin der allg. Formel $H_2N-D-NH_2$ | Aminoverbindung der Formel (8) | Pyrazolon-Verbindung der Formel (4) | Farbton |
|---|---|---|---|---|
| 102 | dito | 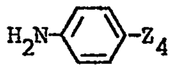 | dito | gelb |
| 103 | dito | 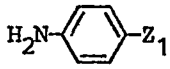 | 1-[6'-Sulfonaphthyl-(1')]-3-carboxy-pyrazolon-(5) | gelb |
| 104 | dito | 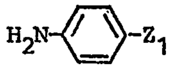 | 1-[7'-Sulfonaphthyl-(1')]-3-carboxy-pyrazolon-(5) | gelb |
| 105 | dito | 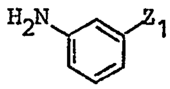 | 1-(4'-Sulfophenyl)-3-carboxy-pyrazolon-(5) | grünst. gelb |
| 106 | dito | 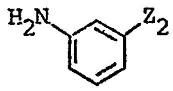 | dito | grünst. gelb |
| 107 | dito | 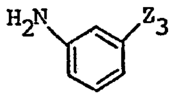 | dito | grünst. gelb |
| 108 | 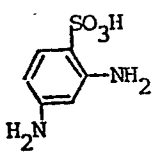 | 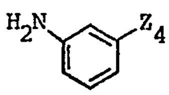 | 1-(4'-Sulfophenyl)-3-carboxy-pyrazolon-(5) | grünst. gelb |
| 109 | dito | 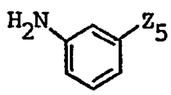 | dito | grünst. gelb |
| 110 | dito | 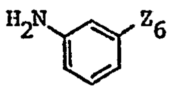 | dito | grünst. gelb |
| 111 | dito | 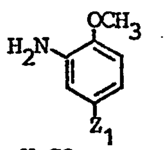 | dito | grünst. gelb |
| 112 | dito | 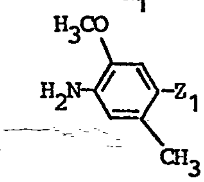 | dito | grünst. gelb |
| 113 | dito | 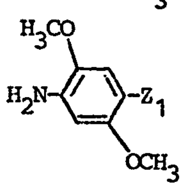 | dito | grünst. gelb |
| 114 | dito | 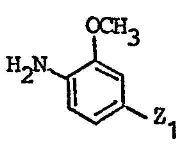 | dito | grünst. gelb |
| 115 | dito | 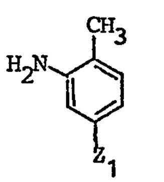 | dito | grünst. gelb |

| Bei-spiel | Diamin der allg. Formel $H_2N-D-NH_2$ | Aminoverbindung der Formel (8) | Pyrazolon-Verbindung der Formel (4) | Farbton |
|---|---|---|---|---|
| 116 | dito | 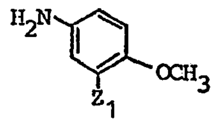 | dito | grünst. gelb |
| 117 | dito | 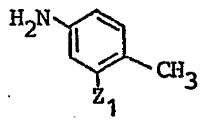 | dito | grünst. gelb |
| 118 | 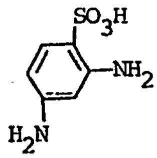 | 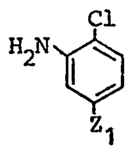 | 1-(4'-Sulfophenyl)-3-carboxy-pyrazolon-(5) | grünst. gelb |
| 119 | dito | 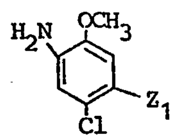 | dito | grünst. gelb |
| 120 | 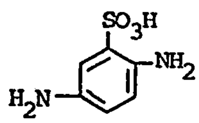 | 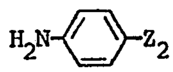 | 1-(4'-Sulfophenyl)-3-carboxy-pyrazolon-(5) | gelbst. orange |
| 121 | dito | 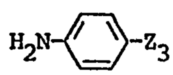 | dito | gelbst. orange |
| 122 | dito | 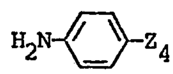 | dito | gelbst. orange |
| 123 | dito | 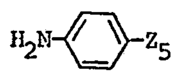 | dito | gelbst. orange |
| 124 | dito | 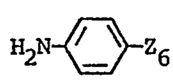 | dito | gelbst. orange |
| 125 | dito | 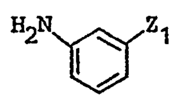 | dito | gelbst. orange |
| 126 | dito | 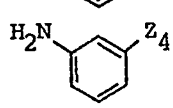 | dito | gelbst. orange |
| 127 | dito | 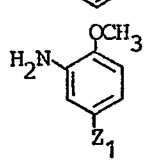 | dito | gelbst. orange |
| 128 | dito | 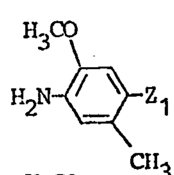 | dito | gelbst. orange |
| 129 | 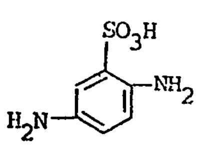 | 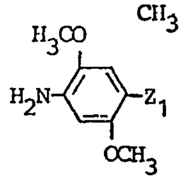 | 1-(4'-Sulfophenyl)-3-carboxy-pyrazolon-(5) | gelbst. orange |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 130 | dito | 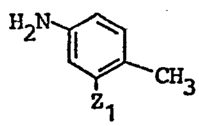 | dito | gelbst. orange |
| 131 | dito | 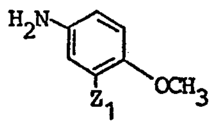 | dito | gelbst. orange |
| 132 | dito | 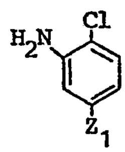 | dito | gelbst. orange |
| 133 | dito | 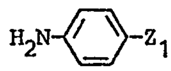 | 1-(4'-Sulfophenyl)-3-carbomethoxy-pyrazolon-(5) | gelbst. orange |
| 134 | dito | 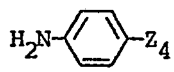 | dito | gelbst. orange |
| 135 | dito | 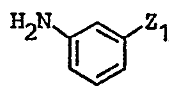 | dito | gelbst. orange |
| 136 | dito | 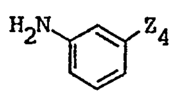 | dito | gelbst. orange |
| 137 | dito | 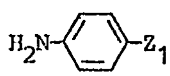 | 1-(4'-Sulfophenyl)-3-carbäthoxy-pyrazolon-(5) | gelbst. orange |
| 138 | dito | 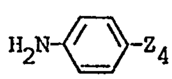 | dito | gelbst. orange |
| 139 | dito | 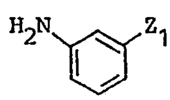 | dito | gelbst. orange |
| 140 | 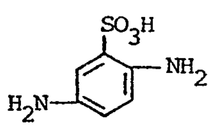 | 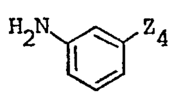 | 1-(4'-Sulfophenyl)-3-carbäthoxy-pyrazolon-(5) | gelbst. orange |
| 141 | dito | 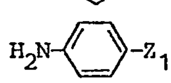 | 1-(4'-Sulfophenyl)-3-methyl-pyrazolon-(5) | goldgelb |
| 142 | dito | 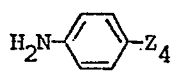 | dito | goldgelb |
| 143 | dito | 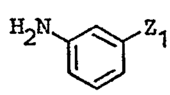 | dito | goldgelb |
| 144 | dito | 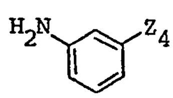 | dito | goldgelb |
| 145 | dito | 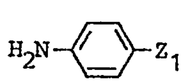 | 1-[4'-(β-Sulfatoäthylsulfonyl)-phenyl]-3-methylpyrazolon-(5) | goldgelb |

| Bei-spiel | Diamin der allg. Formel $H_2N-D-NH_2$ | Aminoverbindung der Formel (8) | Pyrazolon-Verbindung der Formel (4) | Farbton |
|---|---|---|---|---|
| 146 | dito | 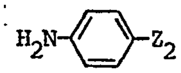 | dito | goldgelb |
| 147 | dito | 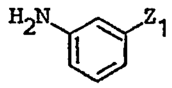 | dito | goldgelb |
| 148 | dito | 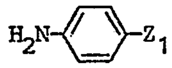 | 1-[4'-(β-Sulfatoäthylsulfonyl)-phenyl]-3-carboxypyrazolon-(5) | gelbst. orange |
| 149 | dito | 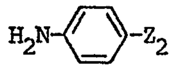 | dito | gelbst. orange |
| 150 | dito | 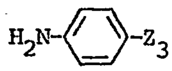 | dito | gelbst. orange |
| 151 | dito | 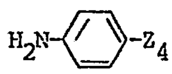 | dito | gelbst. orange |
| 152 | dito | 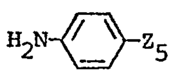 | dito | gelbst. orange |
| 153 | 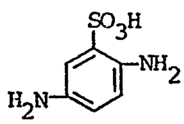 | 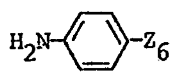 | 1-[4'-(β-Sulfatoäthylsulfonyl)-phenyl]-3-carboxypyrazolon-(5) | gelbst. orange |
| 154 | dito | 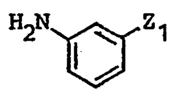 | dito | gelbst. orange |
| 155 | dito | 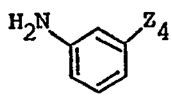 | dito | gelbst. orange |
| 156 | dito | 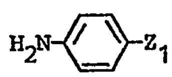 | 1-[4'-(β-Thiosulfatoäthylsulfonyl)-phenyl]-3-carboxypyrazolon-(5) | gelbst. orange |
| 157 | dito | 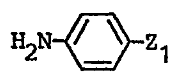 | 1-[4'-(β-Chloräthylsulfonyl)-phenyl]-3-carboxypyrazolon-(5) | gelbst. orange |
| 158 | dito | 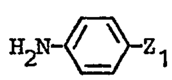 | 1-(4'-Vinylsulfonylphenyl)-3-carboxy-pyrazolon-(5) | gelbst. orange |
| 159 | dito | 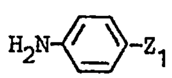 | 1-[4'-(β-Acetatoäthylsulfonyl)-phenyl]-3-carboxypyrazolon-(5) | gelbst. orange |
| 160 | dito | 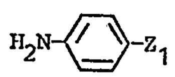 | 1-[4'-(β-Phosphatoäthylsulfonyl)-phenyl]-3-carboxypyrazolon-(5) | gelbst. orange |
| 161 | dito | 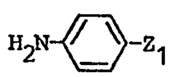 | 1-4'-(β-Sulfatoäthylsulfonyl)-phenyl]-3-carbomethoxypyrazolon-(5) | gelbst. orange |
| 162 | dito | 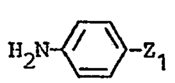 | 1-[4'-(β-Sulfatoäthylsulfonyl)-phenyl]-3-carbäthoxypyrazolon-(5) | gelbst. orange |
| 163 | dito | 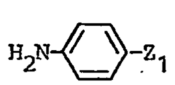 | 1-[3'-(β-Sulfatoäthylsulfonyl)-phenyl]-3-carboxypyrazolon-(5) | gelbst. orange |
| 164 | 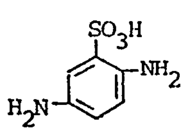 | 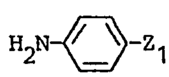 | 1-[2'-Methoxy-5'-(β-sulfatoäthyl-sulfonyl)phenyl]-3-carboxy-pyrazolon-(5) | gelbst. orange |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 165 | dito | 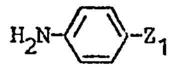 | 1-[2'-Methyl-5'-(β-sulfatoäthylsulfonyl)phenyl]-3-carboxypyrazolon-(5) | gelbst. orange |
| 166 | dito | 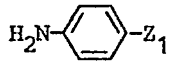 | 1-[4'-Methyl-3'-(β-sulfatoäthylsulfonyl)phenyl]-3-carboxypyrazolon-(5) | gelbst. orange |
| 167 | dito | 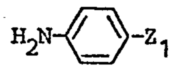 | 1-[4'-Methoxy-3'-(β-sulfatoäthylsulfonyl)phenyl]-3-carboxypyrazolon-(5) | gelbst. orange |
| 168 | dito | 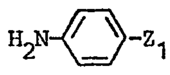 | 1-[2',5'-Dimethoxy-4'-(β-sulfatoäthylsulfonyl)phenyl]-3-carboxypyrazolon-(5) | gelbst. orange |
| 169 | dito | 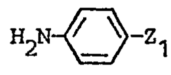 | 1-[2'-Methoxy-5'-methyl-4'-(β-sulfatoäthylsulfonyl)phenyl]-3-carboxypyrazolon-(5) | gelbst. orange |
| 170 | dito | 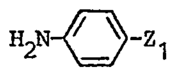 | 1-[2'-Chlor-5'-(β-sulfatoäthylsulfonyl)phenyl]-3-carboxypyrazolon-(5) | gelbst. orange |
| 171 | dito | 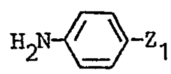 | 1-(2',4'-Disulfophenyl)-3-methylpyrazolon-(5) | goldgelb |
| 172 | dito | 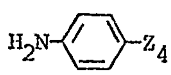 | 1-(2',4'-Disulfophenyl)-3-carboxypyrazolon-(5) | gelbst. orange |
| 173 | dito | 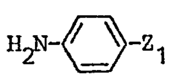 | dito | gelbst. orange |
| 174 | 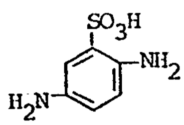 | 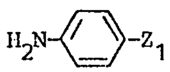 | 1-(2',4'-Disulfophenyl)-3-carbomethoxypyrazolon-(5) | gelbst. orange |
| 175 | dito | 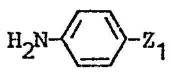 | 1-(3',5'-Disulfophenyl)-3-methylpyrazolon-(5) | goldgelb |
| 176 | dito | 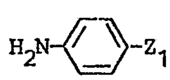 | 1-(3',5'-Disulfophenyl)-3-carboxypyrazolon-(5) | gelbst. orange |
| 177 | dito | 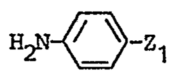 | 1-(3',5'-Disulfophenyl)-3-carbomethoxypyrazolon-(5) | gelbst. orange |
| 178 | dito | 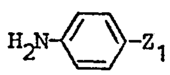 | 1-(2',5'-Disulfophenyl)-3-methylpyrazolon-(5) | goldgelb |
| 179 | dito | 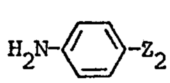 | dito | goldgelb |
| 180 | dito | 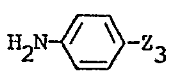 | dito | goldgelb |
| 181 | dito | 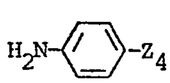 | dito | goldgelb |
| 182 | dito | 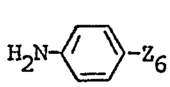 | dito | goldgelb |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 183 | dito | 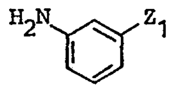 | dito | goldgelb |
| 184 | dito | 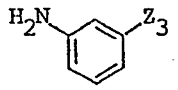 | dito | goldgelb |
| 185 | dito | 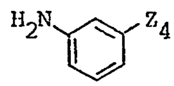 | dito | goldgelb |
| 186 | dito | 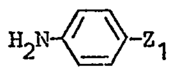 | 1-(2',5'-Disulfophenyl)-3-carboxy-pyrazolon-(5) | gelbst. orange |
| 187 | dito | 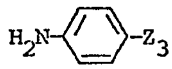 | dito | gelbst. orange |
| 188 | 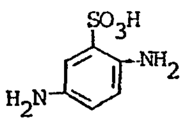 | 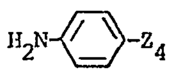 | 1-(2',5'-Disulfophenyl)-3-carboxy-pyrazolon-(5) | gelbst. orange |
| 189 | dito | 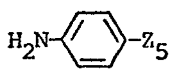 | dito | gelbst. orange |
| 190 | dito | 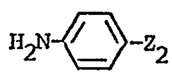 | dito | gelbst. orange |
| 191 | dito | 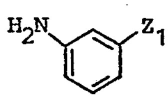 | dito | gelbst. orange |
| 192 | dito | 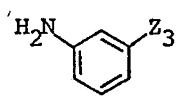 | dito | gelbst. orange |
| 193 | dito | 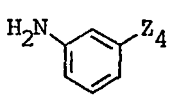 | dito | gelbst. orange |
| 194 | dito | 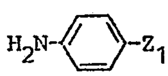 | 1-(2',5'-Disulfophenyl)-3-carbo-methoxypyrazolon-(5) | gelbst. orange |
| 195 | dito | 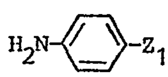 | 1-(2',5'-Disulfophenyl)-3-carbäthoxy-pyrazolon-(5) | gelbst. orange |
| 196 | dito | 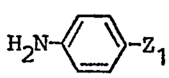 | 1-(2'-Sulfophenyl)-3-carboxy-pyrazolon-(5) | gelbst. orange |
| 197 | dito | 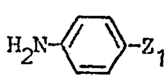 | 1-(2'-Chlor-4'-sulfophenyl)-3-methylpyrazolon-(5) | rotst. gelb |
| 198 | dito | 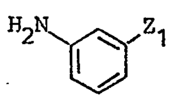 | dito | rotst. gelb |
| 199 | dito | 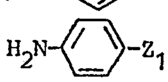 | 1-(2'-Chlor-4'-sulfophenyl)-3-carboxypyrazolon-(5) | gelbst. orange |
| 200 | dito | 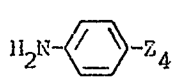 | dito | gelbst. orange |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 201 | 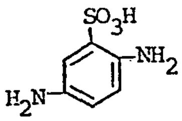 | 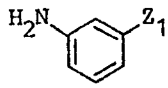 | 1-(2'-Chlor-4'-sulfophenyl)-3-carboxypyrazolon-(5) | gelbst. orange |
| 202 | dito | 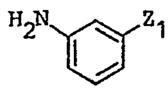 | 1-(2',5'-Dichlor-4'-sulfophenyl)-3-methylpyrazolon-(5) | rotst. gelb |
| 203 | dito | 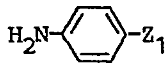 | dito | rotst. gelb |
| 204 | dito | 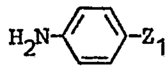 | 1-(2',5'-Dichlor-4'-sulfophenyl)-3-carboxypyrazolon-(5) | gelbst. orange |
| 205 | dito | 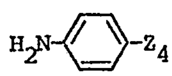 | dito | gelbst. orange |
| 206 | dito | 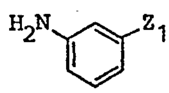 | dito | gelbst. orange |
| 207 | dito | 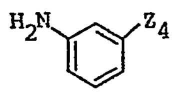 | dito | gelbst. orange |
| 208 | dito | 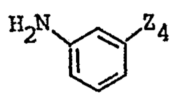 | 1-(2'-Methyl-4'-sulfophenyl)-3-methylpyrazolon-(5) | goldgelb |
| 209 | dito | 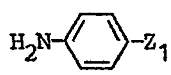 | dito | goldgelb |
| 210 | dito | 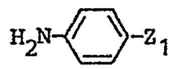 | 1-(2'-Methyl-4'-sulfophenyl)-3-carboxypyrazolon-(5) | gelbst. orange |
| 211 | dito | 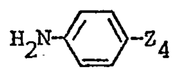 | dito | gelbst. orange |
| 212 | dito | 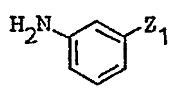 | dito | gelbst. orange |
| 213 | dito | 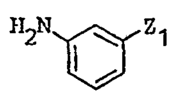 | 1-(2'-Chlor-6'-methyl-4'-sulfophenyl)-3-methylpyrazolon-(5) | rotst. gelb |
| 214 | dito | 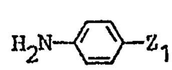 | dito | rotst. gelb |
| 215 | 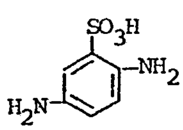 | 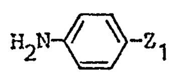 | 1-(2'-Chlor-6'-methyl-4'-sulfophenyl)-3-carboxypyrazolon-(5) | gelbst. orange |
| 216 | dito | 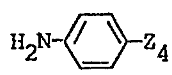 | dito | gelbst. orange |
| 217 | dito | 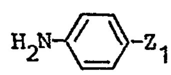 | 1-[6'-Sulfonaphthyl-(2')]-3-carboxypyrazolon-(5) | gelbst. orange |
| 218 | dito | 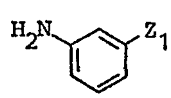 | dito | gelbst. orange |

| Bei-spiel | Diamin der allg. Formel $H_2N-D-NH_2$ | Aminoverbindung der Formel (8) | Pyrazolon-Verbindung der Formel (4) | Farbton |
|---|---|---|---|---|
| 219 | dito | 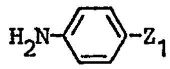 | 1-[4',8'-Disulfonaphthyl-(2')]-3-methylpyrazolon-(5) | goldgelb |
| 220 | dito | 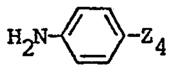 | dito | goldgelb |
| 221 | dito | 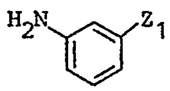 | dito | goldgelb |
| 222 | dito | 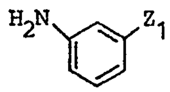 | 1-[4',8'-Disulfonaphthyl-(2')]-3-carboxypyrazolon-(5) | gelbst. orange |
| 223 | dito | 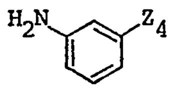 | dito | gelbst. orange |
| 224 | dito | 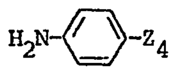 | dito | gelbst. orange |
| 225 | dito | 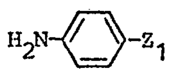 | dito | gelbst. orange |
| 226 | dito | 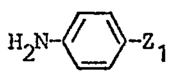 | 1-[4',6',8'-Trisulfonaphthyl-(2')]-3-carboxypyrazolon-(5) | gelbst. orange |
| 227 | dito | 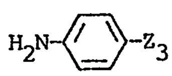 | dito | gelbst. orange |
| 228 | dito | 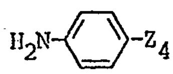 | dito | gelbst. orange |
| 229 | 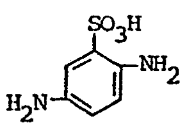 | 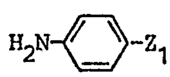 | 1-[6'-Sulfonaphthyl-(1')-3-carboxy-pyrazolon-(5) | gelbst. orange |
| 230 | dito | 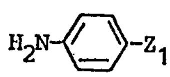 | 1-[7'-Sulfonaphthyl-(1')]-carboxy-pyrazolon-(5) | gelbst. orange |
| 231 | dito | 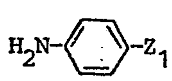 | 1-[4'-(β-Hydroxyäthylsulfonyl)-phenyl]-3-carboxypyrazolon-(5) | gelbst. orange |
| 232 | 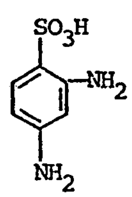 | 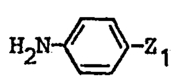 | dito | gelb |
| 233 | 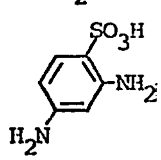 | 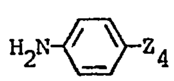 | 1-(2',4'-Disulfophenyl)-3-methyl-pyrazolon-(5) | grünst. gelb |
| 234 | dito | 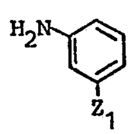 | dito | grünst. gelb |
| 235 | dito | 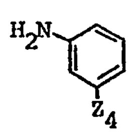 | dito | grünst. gelb |

| Beispiel | Diamin der allg. Formel $H_2N-D-NH_2$ | Aminoverbindung der Formel (8) | Pyrazolon-Verbindung der Formel (4) | Farbton |
|---|---|---|---|---|
| 236 | dito | 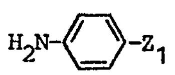 | 1-(2',4'-Disulfophenyl)-3-carboxy-pyrazolon-(5) | grünst. gelb |
| 237 | dito | 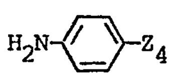 | dito | grünst. gelb |
| 238 | dito | 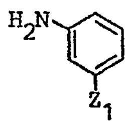 | dito | grünst. gelb |
| 239 | dito | 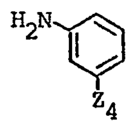 | dito | grünst. gelb |
| 240 | dito | 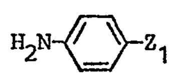 | 1-(2',4'-Disulfophenyl)-3-carbo-methyoxypyrazolon-(5) | grünst. gelb |
| 241 | dito | 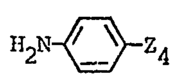 | dito | grünst. gelb |
| 242 | dito | 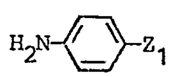 | 1-(2',4'-Disulfophenyl)-3-carbäthoxy-pyrazolon-(5) | grünst. gelb |
| 243 | dito | 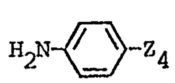 | dito | grünst. gelb |

*Anwendungsbeispiel 1*

20 Teile der erfindungsgemässen Verbindung (als Natriumsalz) von Beispiel 1, 2 oder 6 werden zusammen mit 50 Teilen Harnstoff in 300 Teilen Wasser gelöst. Die Lösung wird unterhalb von 40 °C in 400 Teilen einer neutralen, wässerigen 4%igen Alginatverdickung eingerührt. Man gibt 10 Teile Natriumcarbonat hinzu und füllt das Ganze mit der 4%igen wässerigen Alginatverdickung auf eine Gesamtmenge von 1000 Teilen auf. Man rührt gut durch und bedruckt mit der so hergestellten Druckpaste ein Baumwollgewebe, das nach dem Trocknen bei 60 °C in einem handelsüblichen. Dämpferaggregat 5 min lang mit Sattdampf von 100 bis 103 °C behandelt wird. Der so hergestellte Druck wird anschliessend durch Spülen mit kaltem und heissem Wasser, durch Waschen mit einem neutralen Waschmittel und nochmaliges Spülen mit Wasser fertiggestellt. Nach dem Trocknen der Ware erhält man einen farbstarken grünstichig gelben Druck von sehr guter Lichtechtheit und von sehr guten Nassechtheitseigenschaften.

*Anwendungsbeispiel 2*

Ein Gewebe aus mercerisierter Baumwolle wird mit einer wässerigen Färbeflotte von 20 °C bei einer Flottenaufnahme von 80%, bezogen auf das Warengewicht, geklotzt, die im Liter 20 g des Natriumsalzes der erfindungsgemässen Azoverbindung von Beispiel 1, 2 oder 6 sowie 18 g 33%ige Natronlauge enthält. Das geklotzte Gewebe wird auf eine Docke gewickelt, in eine Folie eingeschlagen und 8 h bei Raumtemperatur liegengelassen. Anschliessend wird es durch Spülen mit kaltem Wasser, durch Behandeln mit einem wenig Essigsäure enthaltenden wässerigen Bad und durch nochmaliges Spülen in kaltem und heissem Wasser fertiggestellt. Nach dem Trocknen erhält man eine farbstarke grünstichig gelbe Färbung von sehr guter Lichtechtheit und von sehr guten Nassechtheiten.

*Anwendungsbeispiel 3*

100 Teile eines Gewebes aus mercerisierter Baumwolle werden 10 min lang bei 60 °C in 3000 Vol.-Teilen eines wässerigen Färbebades behandelt, das 5 Teile des Natriumsalzes der erfindungsgemässen Verbindung von Beispiel 1 sowie 150 Teile wasserfreies Natriumsulfat enthält. Nach dieser 10minütigen Behandlung werden 15 Teile wasserfreies Natriumcarbonat und 4 Teile 33%ige Natronlauge zugesetzt. Die Färbung wird 60 min bei 60 °C weitergeführt. Anschliessend wird das gefärbte Gewebe in üblicher Weise, wie beispielsweise im Anwendungsbeispiel 2, fertiggestellt. Man erhält eine farbstarke, grünstichig gelbe Färbung von sehr guter Lichtechtheit und von sehr guten Nassechtheiten.

*Anwendungsbeispiel 4*

100 Teile eines Wollgewebes werden in ein 40 °C warmes wässeriges Färbebad eingebracht, das aus 3000 Teilen Wasser, 2 Teilen des Natriumsalzes der im Beispiel 1 beschriebenen erfindungsgemässen Verbindung, 0,15 Teilen eines Anlagerungsproduktes von 12 mol Äthylenoxid an 1 mol Stearylamin, 2 Teilen Ammoniumacetat und 2 Teilen 60%iger wässeriger Essigsäure besteht. Die Färbetemperatur wird innerhalb von 30 min auf Kochtemperatur erhöht und die Färbung anschliessend 60 min lang bei 100 °C weitergeführt. Nach dem üblichen Auswaschen und Fertigstellen der erhaltenen Wollfärbung zeigt dieses Wollgewebe einen farbstarken, grünstichig gelben Farbton von sehr guter Lichtechtheit und von sehr guten Nassechtheiten.

*Anwendungsbeispiel 5*

Man verfährt in der im Anwendungsbeispiel 4 angegebenen Färbeweise, ersetzt jedoch das Wollgewebe durch 100 Teile eines Gewebes aus einer ε-Polycaprolactam-Faser. Man erhält ebenfalls eine farbstarke, grünstichig gelbe Färbung von guten Gebrauchsechtheiten.

Gemäss den obigen Anwendungsbeispielen lassen sich auch die anderen, hier in den Ausführungsbeispielen und Tabellenbeispielen beschriebenen erfindungsgemässen Monoazoverbindungen in die Färbe- und Druckverfahren einsetzen. In analoger Weise erhält man beispielsweise mit diesen in den Anwendungsbeispielen 1 bis 5 beschriebenen Färbe- und Druckmethoden mit einem anderen Farbstoff der vorliegenden Erfindung ebenfalls sehr farbstarke Färbungen und Drucke von guten Licht- und Nassechtheitseigenschaften in den Farbtönen, die für das jeweilige Ausführungs- oder Tabellenbeispiel angegeben sind.

## Patentansprüche

1. Wasserlösliche Monoazoverbindungen der allgemeinen Formel (1)

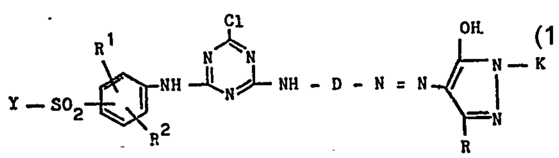

(1)

mit mindestens zwei wasserlöslich machenden Gruppen; in der Formel (1):

$R^1$ ist ein Wasserstoffatom, eine Alkylgruppe von 1 bis 4 C-Atomen, eine Alkoxygruppe von 1 bis 4 C-Atomen oder ein Chloratom,

$R^2$ ist ein Wasserstoffatom, eine Alkylgruppe von 1 bis 4 C-Atomen oder eine Alkoxygruppe von 1 bis 4 C-Atomen,

D ist eine Gruppe der Formel (2a) oder (2b)

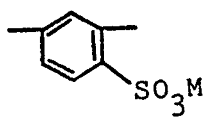

(2a)

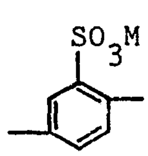

(2b)

in welchen die Gruppe $-SO_3M$ jeweils in ortho-Stellung zur Azogruppe steht, und

M ein Wasserstoffatom oder das Äquivalent eines ein-, zwei- oder dreiwertigen Metalls ist;

R ist die Methylgruppe, eine Carboxygruppe der Formel $-COOM$ mit M der obengenannten Bedeutung oder eine Carbalkoxygruppe von 1 bis 4 C-Atomen,

wobei die Formelglieder $R^1$, $R^2$ und R zueinander gleiche oder voneinander verschiedene Bedeutungen besitzen können,

K ist ein Phenylrest, der durch 1, 2 oder 3 Substituenten aus der Gruppe Sulfo, Carboxy, Sulfamoyl, Carbamoyl, Alkyl von 1 bis 4 C-Atomen, Alkoxy von 1 bis 4 C-Atomen, und Chlor und gegebenenfalls durch eine Gruppe der Formel $-SO_2-Y'$ substituiert sein kann,

in welcher

Y' für die β-Hydroxyäthylgruppe steht oder eine Gruppe Y der nachstehend angegebenen Bedeutung ist,

oder

K ist ein Mono-, Di- oder Trisulfonaphthylrest;

Y ist die Vinylgruppe oder eine Äthylgruppe, die in β-Stellung einen als Anion alkalisch eliminierbaren Rest enthält;

ausgenommen die Verbindung entsprechend der allgemeinen Formel (1), in welcher Y die β-Sulfatoäthylgruppe bedeutet und diese Gruppe $-SO_2-Y$ in p-Stellung zur Aminogruppe gebunden ist, $R^1$ und $R^2$ beide Wasserstoff bedeuten, D einen Rest der Formel (2a) darstellt, R eine Carboxygruppe ist und K für den 2,5-Disulfophenylrest steht.

2. Monoazoverbindungen nach Anspruch 1 der angegebenen und definierten allgemeinen Formel (1) mit mindestens zwei wasserlöslich machenden Gruppen, ausgenommen solche der allgemeinen Formel (1), in welchen K den 2,5-Disulfophenylrest bedeutet, falls D eine Gruppe der in Anspruch 1 genannten Formel (2a) und R eine Carboxygruppe ist.

3. Monoazoverbindungen nach Anspruch 1 der dort angegebenen allgemeinen Formel (1) mit mindestens zwei wasserlöslich machenden Gruppen, in welcher

$R^1$ eine Alkylgruppe von 1 bis 4 C-Atomen, eine Alkoxygruppe von 1 bis 4 C-Atomen oder ein Chloratom ist,

$R^2$ ein Wasserstoffatom, eine Alkylgruppe von 1 bis 4 C-Atomen oder eine Alkoxygruppe von 1 bis 4 C-Atomen ist,

wobei die Formelglieder $R^1$, $R^2$ und R zueinander gleiche oder voneinander verschiedene Bedeutungen besitzen können, und

Y die Vinylgruppe oder eine Äthylgruppe ist, die in β-Stellung einen als Anion alkalisch eliminierbaren Rest enthält,

oder in welcher

$R^1$ und $R^2$ beide ein Wasserstoffatom bedeuten und die Gruppe $-SO_2-Y$ mit Y der obengenannten Bedeutung in meta-Stellung zur Aminogruppe gebunden ist, und

D, R, K, M und Y' jeweils die in Anspruch 1 genannten Bedeutungen haben.

4. Monoazoverbindungen nach einem der Ansprüche 1 oder 3 der allgemeinen Formel (1) mit mindestens zwei wasserlöslich machenden Gruppen, in welcher $R^1$, $R^2$, Y, D und R die in Anspruch 1 genannten Bedeutungen haben und K eine Monosulfophenyl-, den 2,4-Disulfophenyl-, den 2,5-Disulfophenyl-, den 3,5-Disulfophenyl-, einen Monochlormonosulfophenyl-, einen Dichlormonosulfophenyl-, einen Monomethylmonosulfophenyl-, einen Monochlormonomethylmonosulfophenylrest oder einen Rest der allgemeinen Formel (2c)

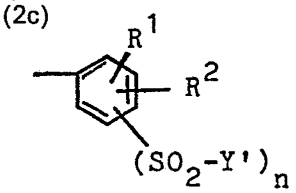

(2c)

bedeutet, in welcher $R^1$, $R^2$ und Y' die in Anspruch 1 genannten Bedeutungen haben und n für die Zahl Null oder 1 steht.

5. Monoazoverbindungen nach einem der Ansprüche 1 oder 3 der allgemeinen Formel (1) mit mindestens zwei wasserlöslich machenden Gruppen, in welcher $R^1$, $R^2$ und Y' die in Anspruch 1 genannten Bedeutungen haben und K einen Rest der allgemeinen Formel (2d)

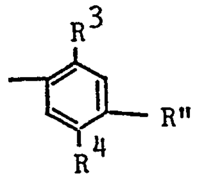

(2d)

ist, in welcher $R^3$ und $R^4$, zueinander gleich oder verschieden, jedes ein Wasserstoff- oder Chloratom oder die Methylgruppe ist und R'' die Sulfogruppe oder eine Gruppe $-SO_2-Y$ mit Y der obigen Bedeutung darstellt.

6. Monoazoverbindungen nach einem der Ansprüche 1 oder 3 der allgemeinen Formel (1) mit mindestens zwei wasserlöslich machenden Gruppen, in welcher $R^1$, $R^2$, Y, D und R die in Anspruch 1 genannten Bedeutungen haben und K einen Monosulfo-, Disulfo- oder Trisulfonaphthylrest bedeutet.

7. Monoazoverbindungen nach einem der Ansprüche 1 bis 6, in welchen R eine Carboxygruppe bedeutet.

8. Monoazoverbindungen nach einem der Ansprüche 1 bis 6, in welchen R die Methylgruppe bedeutet.

9. Monoazoverbindungen nach einem der Ansprüche 1 bis 6, in welchen R die Carbomethoxy- oder Carbäthoxygruppe bedeutet.

10. Monoazoverbindungen nach einem der Ansprüche 1 bis 9, in welchen Y die Vinylgruppe oder bevorzugt die β-Sulfatoäthylgruppe ist.

11. Verbindung nach Anspruch 1 der Formel

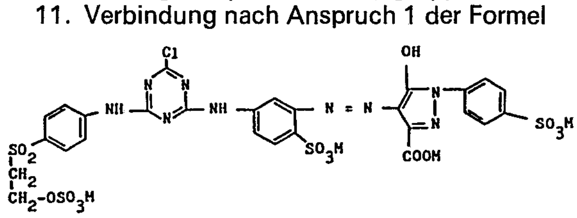

in welcher M die in Anspruch 1 genannte Bedeutung besitzt.

12. Verbindung nach Anspruch 1 der Formel

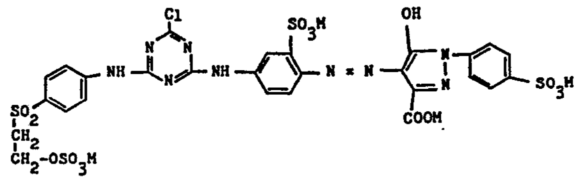

in welcher M die in Anspruch 1 genannte Bedeutung besitzt.

13. Monoazoverbindungen nach einem der Ansprüche 1 bis 12, dadurch gekennzeichnet, dass M für Wasserstoff, Natrium oder Kalium steht.

14. Verfahren zur Herstellung der in Anspruch 1 genannten und definierten Azoverbindungen der allgemeinen Formel (1), dadurch gekennzeichnet, dass man eine Diazoniumverbindung eines Amins der allgemeinen Formel (3)

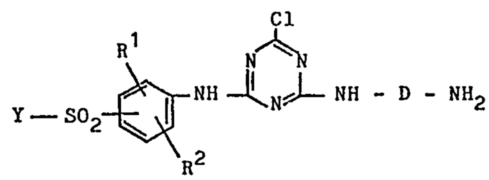

(3)

in welcher $R^1$, $R^2$, D und Y die in Anspruch 1 genannten Bedeutungen haben, mit einer Pyrazolonverbindung der allgemeinen Formel (4)

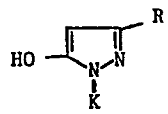

(4)

in welcher R und K die in Anspruch 1 genannten Bedeutungen haben, kuppelt,
oder dass man eine Aminoazoverbindung der allgemeinen Formel (5)

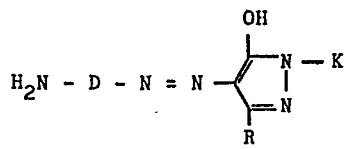

(5)

in welcher D, R und K die in Anspruch 1 genannten Bedeutungen haben, mit einer Dichlortriazin-Verbindung der allgemeinen Formel (6)

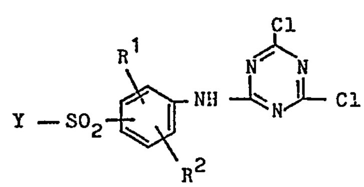

(6)

in welcher $R^1$, $R^2$ und Y die in Anspruch 1 genannten Bedeutungen haben, umsetzt,
oder dass man eine Dichlortriazin-Verbindung der allgemeinen Formel (7)

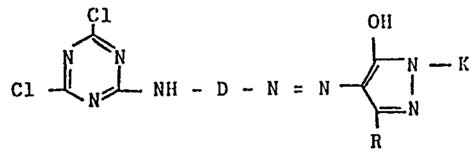

(7)

in welcher D, R und K die in Anspruch 1 genannten Bedeutungen haben, mit einer Aminoverbindung der allgemeinen Formel (8)

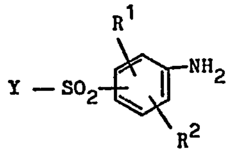
(8)

in welcher $R^1$, $R^2$ und Y die in Anspruch 1 genannten Bedeutungen haben, umsetzt, wobei man die Reaktionskomponenten so auswählt, dass die entstehende Azoverbindung entsprechend der allgemeinen Formel (1) mindestens zwei wasserlöslich machende Gruppen enthält, und wobei die Herstellung der im Anspruch 1 einzeln genannten Verbindung ausgeschlossen ist.

15. Abänderung des Verfahrens nach Anspruch 14 zur Herstellung von in Anspruch 1 genannten und definierten Verbindungen der allgemeinen Formel (1), in welchen jedoch Y für einen Äthylrest steht, der in β-Stellung durch eine Estergruppe, vorzugsweise Sulfatogruppe, substituiert ist, dadurch gekennzeichnet, dass in den in Anspruch 14 genannten Ausgangsverbindungen einer der Formelreste Y oder beide jeweils für die β-Hydroxyäthylgruppe stehen und dass man die erhaltene Azoverbindung entsprechend der allgemeinen Formel (1), in welcher jedoch Y die β-Hydroxyäthylgruppe bedeutet, mit einem Veresterungs- oder Acylierungsmittel, vorzugsweise Sulfatierungsmittel, umsetzt.

16. Verwendung der Verbindungen von Anspruch 1 zum Färben von hydroxy- und/oder carbonamidgruppenhaltigen Materialien, insbesondere Fasermaterialien.

**Revendications**

1. Composés monoazoïques solubles dans l'eau qui répondent à la formule générale (1):

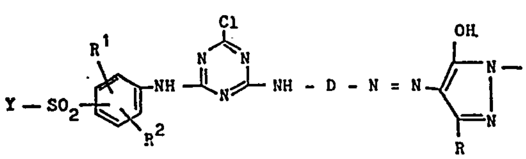
(1)

dans laquelle il y a au moins deux radicaux hydrosolubilisants et dans laquelle:

$R^1$ représente un atome d'hydrogène, un radical alkyle contenant de 1 à 4 atomes de carbone, un radical alcoxy contenant de 1 à 4 atomes de carbone ou un atome de chlore;

$R^2$ représente un atome d'hydrogène, un radical alkyle contenant de 1 à 4 atomes de carbone ou un radical alcoxy contenant de 1 à 4 atomes de carbone;

D représente un radical répondant à l'une des formules (2a) ou (2b):

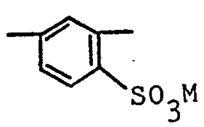
(2a)

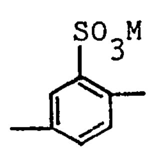
(2b)

dans lesquelles le radical $-SO_3M$ est en position ortho par rapport au radical azo, et

M représente un atome d'hydrogène ou l'équivalent d'un métal monovalent, bivalent ou trivalent;

R représente un radical méthyle, un radical carboxy $-COOM$ dans lequel M a la signification indiquée ci-dessus ou un radical alcoxycarbonyle contenant de 1 à 4 atomes de carbone;

$R^1$, $R^2$ et R pouvant être identiques les uns aux autres ou différents les uns des autres;

K représente un radical phényle qui peut porter un, deux ou trois substituants pris dans l'ensemble constitué par des radicaux sulfo, carboxy, sulfamoyle et carbamoyle, les alkyles contenant 1 à 4 atomes de carbone, les alcoxy contenant 1 à 4 atomes de carbone et le chlore, et éventuellement un radical $-SO_2-Y'$ dans lequel:

Y' représente un radical hydroxy-2-éthyle ou un radical Y tel que défini ci-dessous, ou

K représente un radical monosulfo-, disulfo- ou trisulfonaphthyle, et

Y représente un radical vinyle ou un radical éthyle portant, en position 2, un radical éliminable à l'état d'anion en milieu alcalin;

à l'exception du composé de formule générale (1) dans lequel Y représente un radical sulfato-2-éthyle, le radical $-SO_2-Y$ correspondant est en position para relativement au radical amino, $R^1$ et $R^2$ représentent chacun un atome d'hydrogène, D représente un radical de formule (2a), R représente un radical carboxy et K représente un radical disulfo-2,5-phényle.

2. Composés monoazoïques de formule générale (1) selon la revendication 1, qui contiennent au moins deux radicaux hydrosolubilisants à l'exception de ceux dans lesquels K représente un radical disulfo-2,5-phényle et, en même temps, D représente un radical répondant à la formule (2a) définie à la revendication 1 et R représente un radical carboxy.

3. Composés monoazoïques de formule générale (1) selon la revendication 1, qui contiennent au moins deux radicaux hydrosolubilisants et dans lesquels:

$R^1$ représente un radical alkyle contenant de 1 à 4 atomes de carbone, un radical alcoxy contenant de 1 à 4 atomes de carbone ou un atome de chlore;

$R^2$ représente un atome d'hydrogène, un radical alkyle contenant de 1 à 4 atomes de carbone ou un radical alcoxy contenant de 1 à 4 atomes de carbone;

$R^1$, $R^2$ et R pouvant avoir les mêmes significations ou des significations différentes, et

Y représente un radical vinyle ou un radical éthyle portant, en position 2, un radical éliminable à l'état d'anion en milieu alcalin,

ou dans lesquels:

$R^1$ et $R^2$ représentent chacun un atome d'hydrogène;

Y a la signification indiquée ci-dessus, le radical $-SO_2-Y$ correspondant étant alors en position méta relativement au radical amino, et

D, R, K, M et Y' ont chacun les significations qui leur ont été données à la revendication 1.

4. Composés monoazoïques de formule générale (1) selon l'une des revendications 1 ou 3, qui contiennent au moins deux radicaux hydrosolubilisants et dans lesquels $R^1$, $R^2$, Y, D et R ont les significations données à la revendication 1 tandis que K représente un radical monosulfophényle, disulfo-2,4-phényle, disulfo-2,5-phényle, disulfo-3,5-phényle, monochloromonosulfophényle, dichloromonosulfophényle, monométhylmonosulfophényle ou monochloromonométhylmonosulfophényle, ou un radical répondant à la formule générale (2c):

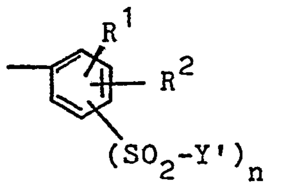
(2c)

dans laquelle $R^1$, $R^2$ et Y' ont les significations données à la revendication 1 et n désigne le nombre 0 ou le nombre 1.

5. Composés monoazoïques de formule générale (1) selon l'une des revendications 1 ou 3, qui contiennent au moins deux radicaux hydrosolubilisants et dans lesquels $R^1$, $R^2$ et Y' ont les significations données à la revendication 1 tandis que K représente un radical répondant à la formule générale (2d):

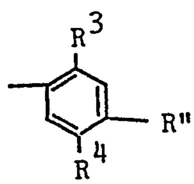
(2d)

dans laquelle $R^3$ et $R^4$, qui peuvent être identiques l'un à l'autre ou différents l'un de l'autre, représentent chacun un atome d'hydrogène ou de chlore ou un radical méthyle, et R" représente un radical sulfo ou un radical $-SO_2-Y$ dans lequel Y a la signification précédemment donnée.

6. Composés monoazoïques de formule générale (1) selon l'une des revendications 1 ou 3, qui contiennent au moins deux radicaux hydrosolubilisants et dans lesquels $R^1$, $R^2$, Y, D et R ont les significations données à la revendication 1 tandis que K représente un radical monosulfodisulfo- ou trisulfonaphtyle.

7. Composés monoazoïques selon l'une des revendications 1 à 6, dans lesquels R représente un radical carboxy.

8. Composés monoazoïques selon l'une des revendications 1 à 6, dans lesquels R représente un radical méthyle.

9. Composés monoazoïques selon l'une des revendications 1 à 6, dans lesquels R représente un radical méthoxycarbonyle ou éthoxycarbonyle.

10. Composés monoazoïques selon l'une des revendications 1 à 9, dans lesquels Y représente un radical vinyle ou, mieux, un radical sulfato-2-éthyle.

11. Composé selon la revendication 1, qui répond à la formule:

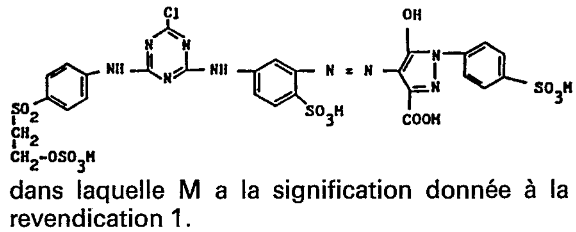

dans laquelle M a la signification donnée à la revendication 1.

12. Composé selon la revendication 1, qui répond à la formule:

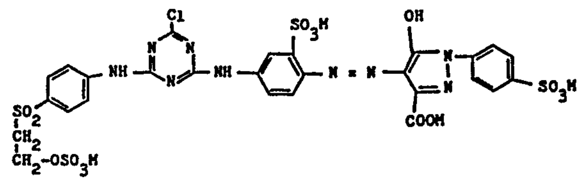

dans laquelle M a la signification donnée à la revendication 1.

13. Composés monoazoïques selon l'une des revendications 1 à 12, caractérisés en ce que M représente l'hydrogène, le sodium ou le potassium.

14. Procédé pour préparer les composés azoïques de formule générale (1) selon la revendication 1, procédé caractérisé en ce qu'on copule un composé de diazonium provenant d'une amine répondant à la formule générale (3):

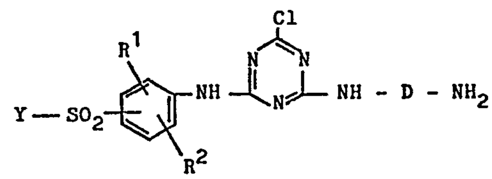
(3)

dans laquelle $R^1$, $R^2$, D et Y ont les significations données à la revendication 1, avec une pyrazolone répondant à la formule générale (4):

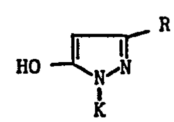
(4)

dans laquelle R et K ont les significations données à la revendication 1, ou on fait réagir un composé aminoazoïque répondant à la formule générale (5):

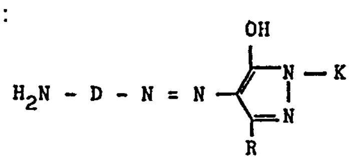
(5)

dans laquelle D, R et K ont les significations données à la revendication 1, avec une dichlorotriazine répondant à la formule générale (6):

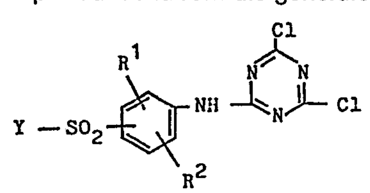
(6)

dans laquelle $R^1$, $R^2$ et Y ont les significations données à la revendication 1, ou on fait réagir une dichlorotriazine répondant à la formule générale (7):

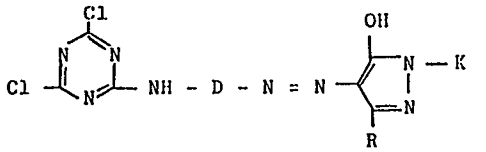
(7)

dans laquelle D, R et K ont les significations données à la revendication 1, avec un composé aminé répondant à la formule générale (8):

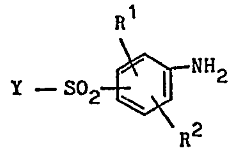
(8)

dans laquelle $R^1$, $R^2$ et Y ont les significations données à la revendication 1, les composants réactionnels étant choisis de telle façon que le composé azoïque formé, répondant à la formule générale (1), renferme au moins deux radicaux hydrosolubilisants, la préparation du composé explicitement mentionné à la revendication 1 étant exclue.

15. Variante du procédé selon la revendication 14 pour la préparation de composés de formule générale (1) selon la revendication 1, dans lesquels toutefois Y représente un radical éthyle portant, en position 2, un radical d'ester, de préférence un radical sulfato, variante caractérisée en ce que, dans les corps de départ mentionnés à la revendication 14, l'un des radicaux Y ou les deux représentent chacun un radical hydroxy-2-éthyle, et en ce qu'on fait réagir le composé azoïque obtenu, qui répond à la formule générale (1) mais dans laquelle, toutefois, Y représente un radical hydroxy-2-éthyle, avec un agent d'estérification ou un agent d'acylation, de préférence avec un agent de sulfatation.

16. Application des composés selon la revendication 1 pour la teinture de matières, surtout de matières fibreuses, contenant des radicaux hydroxy et/ou des radicaux carbamoyle.

## Claims

1. Water-soluble monoazo compounds of the general Formula (1)

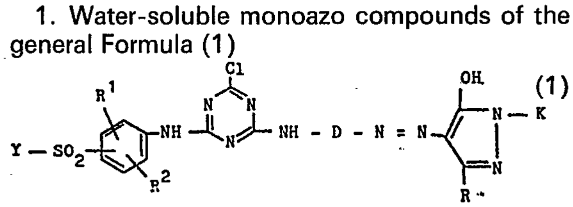
(1)

with at least two groups imparting solubility in water and in which:

$R^1$ is a hydrogen atom, an alkyl group of 1 to 4 C atoms, an alkoxy group of 1 to 4 C atoms or a chlorine atom;

$R^2$ is a hydrogen atom, an alkyl group of 1 to 4 C atoms or an alkoxy group of 1 to 4 C atoms;

D is a group of the Formula (2a) or (2b):

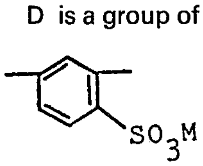
(2a)

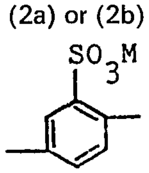
(2b)

in which the group $-SO_3M$ is in each case in the orthoposition relative to the azo group, and

M is a hydrogen atom or an equivalent of a monovalent, divalent or trivalent metal;

R is the methyl group, a carboxy group of the formula $-COOM$ with M of the above-mentioned meaning or a carbalkoxy group of 1 to 4 C atoms; moieties $R^1$, $R^2$ and R can be identical to or different from one another;

K is a phenyl radical which can be substituted by 1, 2 or 3 substituents from the group comprising sulfo, carboxy, sulfamoyl, carbamoyl, alkyl of 1 to 4 C atoms, alkoxy of 1 to 4 C atoms and chlorine, and optionally substituted by a group of the formula $-SO_2-Y'$

in which:

Y' represents the β-hydroxyethyl group or is a group Y of the meaning indicated below, or

K is a monosulfonaphthyl, disulfonaphthyl or trisulfonaphthyl group, and

Y is the vinyl group or an ethyl group which contains, in the β-position, a radical which can be eliminated under alkaline conditions as an anion; disclaimed, however, is the compound corresponding to the general Formula (1) in which Y represents the β-sulfatoethyl group and this group $-SO_2-Y$ is bonded in the p-position relative to the amino group, $R^1$ and $R^2$ both denote hydrogen, D represents a radical of the Formula (2a), R is a carboxy group and K represents the 2,5-disulfophenyl radical.

2. Monoazo compounds according to Claim 1, of the indicated and defined general Formula (1) with at least two groups which impart solubility in water, however, those monoazo compounds of the general Formula (1) being disclaimed in which K denotes the 2,5-disulfophenyl radical if D is a group of the Formula (2a) mentioned in Claim 1 and R is a carboxy group.

3. Monoazo compounds according to Claim 1, of the general Formula (1) indicated there and with at least two groups which impart solubility in water, in which:

$R^1$ is an alkyl group of 1 to 4 C atoms, an alkoxy group of 1 to 4 C atoms or a chlorine atom;

$R^2$ is a hydrogen atom, an alkyl group of 1 to 4 C atoms or an alkoxy group of 1 to 4 C atoms;

$R^1$, $R^2$ and R can be identical to or different from one another, and

Y is the vinyl group or an ethyl group which contains, in the β-position, a radical which can be eliminated under alkaline conditions as an anion, or in which:

$R^1$ and $R^2$ both denote a hydrogen atom, and the group $-SO_2-Y$ with Y of the above-mentioned meaning is bonded in the meta-position relative to the amino group and D, R, K, M and Y' each have the meaning mentioned in Claim 1.

4. Monoazo compounds according to one of Claims 1 or 3, of the general Formula (1) with at least two groups which impart solubility in water, in which $R^1$, $R^2$, Y, D and R have the meanings mentioned in Claim 1 and K denotes a monosulfophenyl, the 2,4-disulfophenyl, the 2,5-disulfophenyl, the 3,5-disulfophenyl, a monochloro-

monosulfophenyl, a dichloro-monosulfophenyl, a monomethyl-monosulfophenyl or a monochloro-monomethyl-monosulfophenyl radical, or a radical of the general Formula (2c):

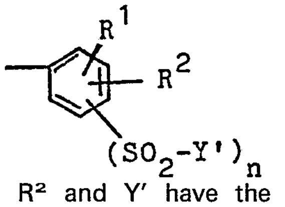

(2c)

in which $R^1$, $R^2$ and Y' have the meanings mentioned in Claim 1 and n represents the number 0 or 1.

5. Monoazo compounds according to one of Claims 1 or 3, of the general Formula (1) with at least two groups which impart solubility in water, in which $R^1$, $R^2$ and Y' have the meanings mentioned in Claim 1 and K is a radical of the general Formula (2d):

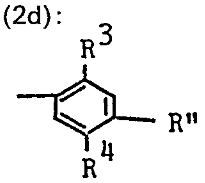

(2d)

in which $R^3$ and $R^4$ are identical or different and each is a hydrogen or chlorine atom or the methyl group, and R" represents the sulfo group or a group $-SO_2-Y$ with Y of the above meaning.

6. Monoazo compounds according to one of Claims 1 or 3, of the general Formula (1) with at least two groups which impart solubility in water, in which $R^1$, $R^2$, Y, D and R have the meanings mentioned in Claim 1 and K denotes a monosulfonaphthyl, disulfonaphthyl or trisulfonaphthyl radical.

7. Monoazo compounds according to one of Claims 1 to 6, in which R denotes a carboxy group.

8. Monoazo compounds according to one of Claims 1 to 6, in which R denotes the methyl group.

9. Monoazo compounds according to one of Claims 1 to 6, in which R denotes the carbomethoxy or carbethoxy group.

10. Monoazo compounds according to one of Claims 1 to 9, in which Y is the vinyl group or, preferably, the β-sulfatoethyl group.

11. A compound according to Claim 1, of the formula:

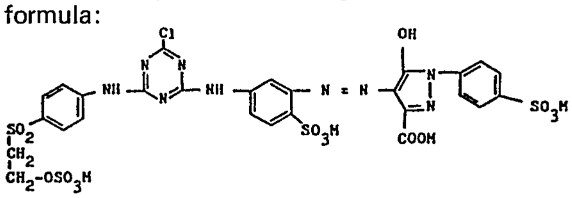

in which M has the meaning mentioned in Claim 1.

12. Compound according to Claim 1, of the formula:

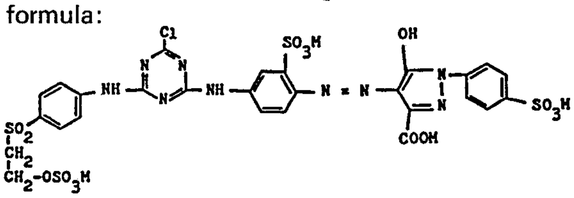

in which M has the meaning mentioned in Claim 1.

13. Monoazo compounds according to one of Claims 1 to 12, characterized by that M represents hydrogen, sodium or potassium.

14. A process for preparing the azo compounds of the general Formula (1) mentioned and defined in Claim 1, characterized by that a diazonium compound of an amine of the general Formula (3):

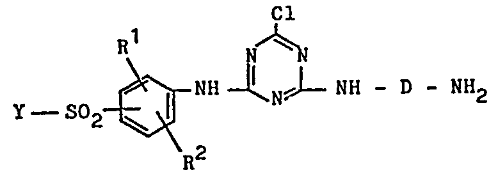

(3)

in which $R^1$, $R^2$, D and Y have the meanings mentioned in Claim 1, is coupled with a pyrazolone compound of the general Formula (4):

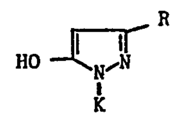

(4)

in which R and K have the meanings mentioned in Claim 1, or that an aminoazo compound of the general Formula (5):

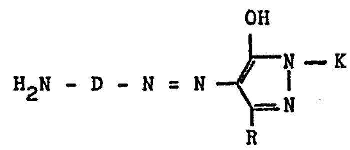

(5)

in which D, R and K have the meanings mentioned in Claim 1, is reacted with a dichlorotriazine compound of the general Formula (6):

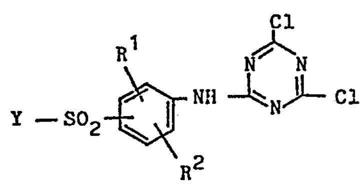

(6)

in which $R^1$, $R^2$ and Y have the meanings mentioned in Claim 1,
or that a dichlorotriazine compound of the general Formula (7):

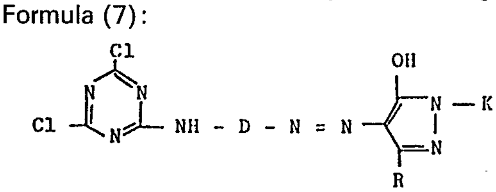

(7)

in which D, R and K have the meanings mentioned in Claim 1, is reacted with an amino compound of the general Formula (8):

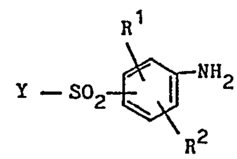

(8)

in which $R^1$, $R^2$ and Y have the meanings mentioned in Claim 1, while selecting the reaction components in such a way that the resulting azo compound corresponding to the general Formula (1) contains at least two groups which

impart solubility in water and the preparation of the compound singled out in Claim 1 is excluded.

15. A modification of the process of Claim 14, for preparing the compounds of the general Formula (1) mentioned and defined in Claim 1 but in which Y represents an ethyl radical which is substituted in the β-position by an ester group, preferably a sulfato group, characterized in that one or both of the formula radicals Y in the starting compounds mentioned in Claim 14 represent the β-hydroxyethyl group and that the resulting azo compound corresponding to the general Formula (1) in which, however, Y represents the β-hydroxyethyl group, is reacted with an esterifying or acylating agent, preferably a sulfating agent.

16. The use of the compounds of Claim 1 for colouring a material, in particular a fiber material, containing hydroxy and/or carbonamide groups.